# EUROPEAN PATENT APPLICATION

(11) **EP 4 692 837 A1**
(43) Date of publication of application: **11.02.2026**
(21) Application number: 24842097.8
(22) Date of filing: 11.06.2024
(51) Int. Cl.: G01S 5/16

(54) **POSITIONING METHOD AND ELECTRONIC DEVICE**

(30) Priority: 19.07.2023 CN 202310891551
(71) Applicant: Huawei Technologies Co., Ltd., Shenzhen, Guangdong 518129 (CN)
(72) Inventor: HU, Zhengyuan, Shenzhen, Guangdong 518129 (CN); XU, Haowei, Shenzhen, Guangdong 518129 (CN); ZHAO, Xuewen, Shenzhen, Guangdong 518129 (CN); WANG, Guangde, Shenzhen, Guangdong 518129 (CN); LI, Xin, Shenzhen, Guangdong 518129 (CN); ZHAI, Weiting, Shenzhen, Guangdong 518129 (CN)
(74) Representative: Maiwald GmbH
(86) International application number: PCT/CN2024/098447
(87) International publication number: WO 2025/016097

(57) **Abstract**

This application provides a positioning method and an electronic device, and relates to the field of terminal technologies. In this application, an initial location of a positioned second electronic device can be quickly determined based on an auxiliary determining signal transmitted between an auxiliary determining unit preconfigured in a first electronic device and an auxiliary determining unit preconfigured in the second electronic device, to effectively improve a positioning success rate, and greatly shorten positioning time of the initial abnormal location. The method is applied to the first electronic device. The first electronic device includes a first wireless positioning module, an auxiliary determining unit is disposed in each of M signal areas of the first wireless positioning module, an optical angle of the auxiliary determining unit is less than or equal to a signal coverage angle of a corresponding signal area, and M is a positive integer. The method includes: receiving, via a first auxiliary determining unit, the auxiliary determining signal sent by the second electronic device; and determining, based on the auxiliary determining signal, effectiveness of target positioning data obtained by the first electronic device via the first wireless positioning module.

## Description

This application claims priority to Chinese Patent Application No. 202310891551.0, filed with the China National Intellectual Property Administration on July 19, 2023 and entitled "POSITIONING METHOD AND ELECTRONIC DEVICE", which is incorporated herein by reference in its entirety.

### TECHNICAL FIELD

Embodiments of this application relate to the field of terminal technologies, and in particular, to a positioning method and an electronic device.

### BACKGROUND

With development of terminal technologies, a wireless positioning technology is widely applied to a plurality of scenarios. Currently, common wireless positioning technologies include, for example, positioning technologies based on ultra-wideband (ultra-wideband, UWB) technology/millimeter wave, an electromagnetic field, and optical tracking. However, these positioning technologies are affected by environmental conditions, design, and the like, commonly resulting in problems such as positioning signal coverage gap.

For example, in common azimuth measurement in a wireless positioning process, due to consistency between antenna performance and an environment, azimuth data obtained by an electronic device through measurement in some directions cannot effectively one-to-one correspond to actual values. As a result, when a user starts measurement from these locations, an effective location cannot be located.

### SUMMARY

To resolve the foregoing technical problem, this application provides a positioning method and an electronic device. According to the technical solution provided in this application, an initial location of a positioned second electronic device can be quickly determined based on an auxiliary determining signal transmitted between an auxiliary determining unit preconfigured in a first electronic device and an auxiliary determining unit preconfigured in the second electronic device, to effectively improve a positioning success rate, and greatly shorten positioning time of the initial abnormal location.

To achieve the foregoing technical objective, this application provides the following technical solutions.

According to a first aspect, a positioning method is provided, and is applied to a first electronic device. The first electronic device includes a first wireless positioning module, an auxiliary determining unit is disposed in each of M signal areas of the first wireless positioning module, an optical angle of the auxiliary determining unit is less than or equal to a signal coverage angle of a corresponding signal area, and M is a positive integer. The method includes: receiving, via a first auxiliary determining unit, an auxiliary determining signal sent by a second electronic device; and determining, based on the auxiliary determining signal, effectiveness of target positioning data obtained by the first electronic device via the first wireless positioning module.

In this way, the low-cost auxiliary determining unit is disposed in the signal area, so that fast and accurate positioning can also be implemented during high-precision positioning and tracking. In this way, a problem of a positioning exception in an abnormal positioning signal area is resolved at low costs, an initial location of a positioned device is quickly determined, and user experience is improved.

In addition, when the initial location of the positioned device is an abnormal location, an effective positioning signal area may also be determined through an optical constraint of the auxiliary determining unit, to quickly determine an electronic device configured to generate effective positioning data, and greatly shorten positioning time of the initial abnormal location.

According to the first aspect, the auxiliary determining signal is a signal received by the first electronic device in a first signal area in the M signal areas, and the first auxiliary determining unit is disposed in the first signal area. Determining, based on the auxiliary determining signal, effectiveness of the target positioning data obtained by the first electronic device via the first wireless positioning module includes: determining, based on a signal feature of the auxiliary determining signal, a second signal area in which the auxiliary determining signal is sent, where the second signal area is a signal area of a second wireless positioning module included in the second electronic device; and determining effectiveness of the target positioning data based on status information of the first signal area and the second signal area.

In some examples, the target positioning data obtained by the first electronic device may be positioning data locally determined by the first electronic device, or may be received positioning data sent by the second electronic device.

In some examples, effectiveness of the positioning data indicates whether a peer device is located in an effective positioning signal area of a device when the positioning data is obtained. If the peer device is located in the effective positioning signal area of the device, the local positioning data obtained by the device is effective data. If the peer device is located in an abnormal positioning signal area of the device, the local positioning data obtained by the device is ineffective data. Whether the peer device is located in the effective positioning signal area of the device may be determined based on the signal area in which the auxiliary determining unit receiving or sending the auxiliary determining signal is located.

According to the first aspect or any implementation of the first aspect, the signal areas of the first wireless positioning module include a first effective positioning signal area and a first abnormal positioning signal area, and the signal area of the second wireless positioning module includes a second effective positioning signal area and a second abnormal positioning signal area. Determining effectiveness of the target positioning data based on the status information of the first signal area and the second signal area includes: when the status information indicates that the first signal area includes the first effective positioning signal area, and the second signal area includes the second effective positioning signal area, obtaining local first positioning data via the first wireless positioning module, and receiving second positioning data sent by the second electronic device, where effective target positioning data is the first positioning data or the second positioning data.

That is, the first electronic device is located in the effective positioning signal area of the second positioning module of the second electronic device, and the second electronic device is located in the effective positioning signal area of the first positioning module of the first electronic device. Therefore, both the first electronic device and the second electronic device can obtain effective positioning data. In this case, the first electronic device may select any piece of the positioning data as the final target positioning data.

According to the first aspect or any implementation of the first aspect, determining effectiveness of the target positioning data based on the status information of the first signal area and the second signal area includes: when the status information indicates that the first signal area includes the first effective positioning signal area, and the second signal area includes the second abnormal positioning signal area, obtaining local first positioning data via the first wireless positioning module, where effective target positioning data is the first positioning data.

That is, the first electronic device is located in the abnormal positioning signal area of the second positioning module of the second electronic device, and the second electronic device is located in the effective positioning signal area of the first positioning module of the first electronic device. Therefore, the first electronic device may obtain effective positioning data. In this case, the first electronic device may use the locally obtained first positioning data as the final target positioning data.

According to the first aspect or any implementation of the first aspect, determining effectiveness of the target positioning data based on the status information of the first signal area and the second signal area includes: when the status information indicates that the first signal area includes the first abnormal positioning signal area, and the second signal area includes the second effective positioning signal area, receiving the second positioning data sent by the second electronic device, where effective target positioning data is the second positioning data.

That is, the first electronic device is located in the effective positioning signal area of the second positioning module of the second electronic device, and the second electronic device is located in the abnormal positioning signal area of the first positioning module of the first electronic device. Therefore, the second electronic device may obtain effective positioning data. In this case, the first electronic device may use the obtained second positioning data sent by the second electronic device as the final target positioning data.

According to the first aspect or any implementation of the first aspect, determining effectiveness of the target positioning data based on the status information of the first signal area and the second signal area includes: when the status information indicates that the first signal area includes the first abnormal positioning signal area, and the second signal area includes the second abnormal positioning signal area, sending a first indication to the second electronic device, where the first indication indicates to send the auxiliary determining signal again, and the target positioning data is ineffective.

That is, the first electronic device is located in the abnormal positioning signal area of the second positioning module of the second electronic device, and the second electronic device is located in the abnormal positioning signal area of the first positioning module of the first electronic device. Therefore, neither the first electronic device nor the second electronic device can obtain effective positioning data. In this case, the first electronic device may determine that this round of positioning fails. Therefore, the first electronic device may indicate the second electronic device to send the auxiliary determining signal again, to start a next round of positioning.

According to the first aspect or any implementation of the first aspect, the auxiliary determining unit is at least one of a transmitting unit or a receiving unit.

According to the first aspect or any implementation of the first aspect, the first wireless positioning module includes N signal areas, no auxiliary determining unit is disposed in a signal area other than the M signal areas, and N is a positive integer greater than M.

Optionally, the first wireless positioning module includes the N signal areas, auxiliary determining units are disposed in the M signal areas in the N signal areas, and no auxiliary determining unit is disposed in another signal area. Alternatively, an auxiliary determining unit is disposed in each of the N signal areas included in the first wireless positioning module.

According to the first aspect or any implementation of the first aspect, the first wireless positioning module is any one of the following: an electromagnetic positioning module, an ultra-wideband UWB technology positioning module, a millimeter wave positioning module, or an optical tracking positioning module.

According to the first aspect or any implementation of the first aspect, the auxiliary determining signal is an optical signal.

Optionally, optical signals sent by different auxiliary determining units are modulated optical signals. For example, the auxiliary determining unit may perform feature adjustment on the transmitted optical signal through frequency adjustment, amplitude modulation, or the like. Alternatively, different optical signals are distinguished by carrying different information in the optical signals. Therefore, the signal area in which the auxiliary determining unit sending the optical signal is located may be determined by determining the signal feature of the optical signal.

According to a second aspect, a positioning method is provided, and is applied to a second electronic device. The second electronic device includes a second wireless positioning module, an auxiliary determining unit is disposed in each of P signal areas of the second wireless positioning module, an optical angle of the auxiliary determining unit is less than or equal to a signal coverage angle of a corresponding signal area, and P is a positive integer. The method includes: in response to a user operation, sending an auxiliary determining signal to a first electronic device via a second auxiliary determining unit in a second signal area, where the second signal area is an area in the P signal areas, and the auxiliary determining signal is used to determine effectiveness of positioning data determined by the first electronic device or the second electronic device.

According to the second aspect, the method further includes: receiving status information that is of the second signal area and a first signal area and that is sent by the first electronic device, where the first signal area is an area in M signal areas of a first wireless positioning module in the first electronic device, M is a positive integer, a first auxiliary determining unit is disposed in the first signal area, and the first auxiliary determining unit is an auxiliary determining unit that receives the auxiliary determining signal; in response to the status information, obtaining local second positioning data via the second wireless positioning module; and sending the second positioning data to the first electronic device, where the second positioning data is used by the first electronic device to determine target positioning data.

According to the second aspect or any implementation of the second aspect, the signal areas of the first wireless positioning module include a first effective positioning signal area and a first abnormal positioning signal area, and the signal areas of the second wireless positioning module include a second effective positioning signal area and a second abnormal positioning signal area. In response to the status information, obtaining the local second positioning data via the second wireless positioning module includes: when the status information indicates that the second signal area includes the second effective positioning signal area, obtaining the local second positioning data via the second wireless positioning module.

According to the second aspect or any implementation of the second aspect, the auxiliary determining unit is at least one of a transmitting unit or a receiving unit.

According to the second aspect or any implementation of the second aspect, the second wireless positioning module includes O signal areas, no auxiliary determining unit is disposed in a signal area other than the P signal areas, and O is a positive integer greater than P.

According to the second aspect or any implementation of the second aspect, the second wireless positioning module is any one of the following: an electromagnetic positioning module, an ultra-wideband UWB technology positioning module, a millimeter wave positioning module, or an optical tracking positioning module.

According to the second aspect or any implementation of the second aspect, the auxiliary determining signal is an optical signal.

According to a third aspect, an electronic device is provided. The electronic device includes a first wireless positioning module, an auxiliary determining unit is disposed in each of M signal areas of the first wireless positioning module, an optical angle of the auxiliary determining unit is less than or equal to a signal coverage angle of a corresponding signal area, the auxiliary determining unit is configured to determine effectiveness of positioning data obtained via the first wireless positioning module, and M is a positive integer.

According to the third aspect, the auxiliary determining unit is at least one of a transmitting unit or a receiving unit.

According to the third aspect or any implementation of the third aspect, the first wireless positioning module includes N signal areas, no auxiliary determining unit is disposed in a signal area other than the M signal areas, and N is a positive integer greater than M.

According to the third aspect or any implementation of the third aspect, the first wireless positioning module is any one of the following: an electromagnetic positioning module, an ultra-wideband UWB technology positioning module, a millimeter wave positioning module, or an optical tracking positioning module.

According to a fourth aspect, an electronic device is provided. The electronic device includes a second wireless positioning module, an auxiliary determining unit is disposed in each of P signal areas of the second wireless positioning module, an optical angle of the auxiliary determining unit is less than or equal to a signal coverage angle of a corresponding signal area, the auxiliary determining unit is configured to determine effectiveness of positioning data obtained via a first wireless positioning module, and P is a positive integer.

According to the fourth aspect, the auxiliary determining unit is at least one of a transmitting unit or a receiving unit.

According to the fourth aspect or any implementation of the fourth aspect, the second wireless positioning module includes O signal areas, no auxiliary determining unit is disposed in a signal area other than the P signal areas, and O is a positive integer greater than P.

According to the fourth aspect or any implementation of the fourth aspect, the second wireless positioning module is any one of the following: an electromagnetic positioning module, an ultra-wideband UWB technology positioning module, a millimeter wave positioning module, or an optical tracking positioning module.

According to a fifth aspect, a positioning system is provided. The positioning system includes the first electronic device according to the third aspect and the second electronic device according to the fourth aspect.

According to a sixth aspect, a first electronic device is provided. The first electronic device includes a processor and a memory. The memory is coupled to the processor. The memory is configured to store computer program code. The computer program code includes computer instructions. When the processor reads the computer instructions from the memory, the first electronic device is enabled to: receive, via a first auxiliary determining unit, an auxiliary determining signal sent by a second electronic device; and determine, based on the auxiliary determining signal, effectiveness of target positioning data obtained by the first electronic device via a first wireless positioning module. The first electronic device includes the first wireless positioning module, an auxiliary determining unit is disposed in each of M signal areas of the first wireless positioning module, an optical angle of the auxiliary determining unit is less than or equal to a signal coverage angle of a corresponding signal area, and M is a positive integer.

According to the sixth aspect, the auxiliary determining signal is a signal received by the first electronic device in a first signal area in the M signal areas, and the first auxiliary determining unit is disposed in the first signal area. Determining, based on the auxiliary determining signal, effectiveness of the target positioning data obtained by the first electronic device via the first wireless positioning module includes: determining, based on a signal feature of the auxiliary determining signal, a second signal area in which the auxiliary determining signal is sent, where the second signal area is a signal area of a second wireless positioning module included in the second electronic device; and determining effectiveness of the target positioning data based on status information of the first signal area and the second signal area.

According to the sixth aspect or any implementation of the sixth aspect, the signal areas of the first wireless positioning module include a first effective positioning signal area and a first abnormal positioning signal area, and the signal area of the second wireless positioning module includes a second effective positioning signal area and a second abnormal positioning signal area. Determining effectiveness of the target positioning data based on the status information of the first signal area and the second signal area includes: when the status information indicates that the first signal area includes the first effective positioning signal area, and the second signal area includes the second effective positioning signal area, obtaining local first positioning data via the first wireless positioning module, and receiving second positioning data sent by the second electronic device, where effective target positioning data is the first positioning data or the second positioning data.

According to the sixth aspect or any implementation of the sixth aspect, determining effectiveness of the target positioning data based on the status information of the first signal area and the second signal area includes: when the status information indicates that the first signal area includes the first effective positioning signal area, and the second signal area includes the second abnormal positioning signal area, obtaining local first positioning data via the first wireless positioning module, where effective target positioning data is the first positioning data.

According to the sixth aspect or any implementation of the sixth aspect, determining effectiveness of the target positioning data based on the status information of the first signal area and the second signal area includes: when the status information indicates that the first signal area includes the first abnormal positioning signal area, and the second signal area includes the second effective positioning signal area, receiving second positioning data sent by the second electronic device, where effective target positioning data is the second positioning data.

According to the sixth aspect or any implementation of the sixth aspect, determining effectiveness of the target positioning data based on the status information of the first signal area and the second signal area includes: when the status information indicates that the first signal area includes the first abnormal positioning signal area, and the second signal area includes the second abnormal positioning signal area, sending a first indication to the second electronic device, where the first indication indicates to send the auxiliary determining signal again, and the target positioning data is ineffective.

According to the sixth aspect or any implementation of the sixth aspect, the auxiliary determining unit is at least one of a transmitting unit or a receiving unit.

According to the sixth aspect or any implementation of the sixth aspect, the first wireless positioning module includes N signal areas, no auxiliary determining unit is disposed in a signal area other than the M signal areas, and N is a positive integer greater than M.

According to the sixth aspect or any implementation of the sixth aspect, the first wireless positioning module is any one of the following: an electromagnetic positioning module, an ultra-wideband UWB technology positioning module, a millimeter wave positioning module, or an optical tracking positioning module.

According to the sixth aspect or any implementation of the sixth aspect, the auxiliary determining signal is an optical signal.

According to a seventh aspect, a second electronic device is provided. The second electronic device includes a processor and a memory. The memory is coupled to the processor. The memory is configured to store computer program code. The computer program code includes computer instructions. When the processor reads the computer instructions from the memory, the second electronic device is enabled to: in response to a user operation, send an auxiliary determining signal to a first electronic device via a second auxiliary determining unit in a second signal area. The second signal area is an area in P signal areas, and the auxiliary determining signal is used to determine effectiveness of positioning data determined by the first electronic device or the second electronic device. The second electronic device includes a second wireless positioning module, an auxiliary determining unit is disposed in each of P signal areas of the second wireless positioning module, an optical angle of the auxiliary determining unit is less than or equal to a signal coverage angle of a corresponding signal area, and P is a positive integer.

According to the seventh aspect, when the processor reads the computer instructions from the memory, the second electronic device is further enabled to: receive status information that is of the second signal area and a first signal area and that is sent by the first electronic device, where the first signal area is an area in M signal areas of a first wireless positioning module in the first electronic device, M is a positive integer, a first auxiliary determining unit is disposed in the first signal area, and the first auxiliary determining unit is an auxiliary determining unit that receives the auxiliary determining signal; in response to the status information, obtain local second positioning data via the second wireless positioning module; and send the second positioning data to the first electronic device, where the second positioning data is used by the first electronic device to determine target positioning data.

According to the seventh aspect or any implementation of the seventh aspect, the signal areas of the first wireless positioning module include a first effective positioning signal area and a first abnormal positioning signal area, and the signal areas of the second wireless positioning module include a second effective positioning signal area and a second abnormal positioning signal area. In response to the status information, obtaining the local second positioning data via the second wireless positioning module includes: when the status information indicates that the second signal area includes the second effective positioning signal area, obtaining local second positioning data via the second wireless positioning module.

According to the seventh aspect or any implementation of the seventh aspect, the auxiliary determining unit is at least one of a transmitting unit or a receiving unit.

According to the seventh aspect or any implementation of the seventh aspect, the second wireless positioning module includes O signal areas, no auxiliary determining unit is disposed in a signal area other than the P signal areas, and O is a positive integer greater than P.

According to the seventh aspect or any implementation of the seventh aspect, the second wireless positioning module is any one of the following: an electromagnetic positioning module, an ultra-wideband UWB technology positioning module, a millimeter wave positioning module, or an optical tracking positioning module.

According to the seventh aspect or any implementation of the seventh aspect, the auxiliary determining signal is an optical signal.

According to an eighth aspect, an electronic device is provided. The electronic device has a function of implementing the positioning method according to the first aspect and any possible implementation of the first aspect. Alternatively, the electronic device has a function of implementing the positioning method according to the second aspect and any possible implementation of the second aspect. The function may be implemented by hardware, or may be implemented by hardware executing corresponding software. The hardware or the software includes one or more modules corresponding to the function.

According to a ninth aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect, or the electronic device is enabled to perform the method according to the second aspect or any implementation of the second aspect.

According to a tenth aspect, a computer program product is provided. When the computer program product runs on an electronic device, the electronic device is enabled to perform the method according to the first aspect or any implementation of the first aspect, or the electronic device is enabled to perform the method according to the second aspect or any implementation of the second aspect.

According to an eleventh aspect, a circuit system is provided. The circuit system includes a processing circuit, and the processing circuit is configured to perform the method according to the first aspect or any implementation of the first aspect, or the processing circuit is configured to perform the method according to the second aspect or any implementation of the second aspect.

According to a twelfth aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to the first aspect or any implementation of the first aspect, or the at least one processor performs the method according to the second aspect or any implementation of the second aspect.

For technical effect of the foregoing aspects, refer to each other. Details are not described herein again.

### BRIEF DESCRIPTION OF DRAWINGS

FIG. 1 is a diagram of an azimuth measurement result according to an embodiment of this application;
FIG. 2 is a diagram of a positioning scenario based on an inertial navigation module according to an embodiment of this application;
FIG. 3 is a diagram of a positioning scenario based on a plurality of wireless positioning modules according to an embodiment of this application;
FIG. 4 is a diagram of a communication system to which a positioning method is applied according to an embodiment of this application;
FIG. 5 is a diagram 1 of a hardware structure of a first electronic device according to an embodiment of this application;
FIG. 6 is a diagram 2 of a hardware structure of a first electronic device according to an embodiment of this application;
FIG. 7 is a diagram 3 of a hardware structure of a first electronic device according to an embodiment of this application;
FIG. 8 is a schematic flowchart 1 of a positioning method according to an embodiment of this application;
FIG. 9 is a diagram 1 of a positioning scenario according to an embodiment of this application;
FIG. 10 is a diagram 2 of a positioning scenario according to an embodiment of this application;
FIG. 11 is a diagram 3 of a positioning scenario according to an embodiment of this application;
FIG. 12 is a diagram 4 of a positioning scenario according to an embodiment of this application;
FIG. 13 is a diagram 5 of a positioning scenario according to an embodiment of this application;
FIG. 14 is a diagram 6 of a positioning scenario according to an embodiment of this application;
FIG. 15 is a diagram 7 of a positioning scenario according to an embodiment of this application;
FIG. 16A and FIG. 16B are a diagram 8 of a positioning scenario according to an embodiment of this application;
FIG. 17A and FIG. 17B are a diagram 9 of a positioning scenario according to an embodiment of this application;
FIG. 18A and FIG. 18B are a diagram 10 of a positioning scenario according to an embodiment of this application;
FIG. 19A and FIG. 19B are a diagram 11 of a positioning scenario according to an embodiment of this application;
FIG. 20A and FIG. 20B are a diagram 12 of a positioning scenario according to an embodiment of this application;
FIG. 21 is a schematic flowchart 2 of a positioning method according to an embodiment of this application;
FIG. 22 is a diagram of a structure of a first electronic device according to an embodiment of this application; and
FIG. 23 is a diagram of a structure of a second electronic device according to an embodiment of this application.

### DESCRIPTION OF EMBODIMENTS

The following describes technical solutions in embodiments of this application with reference to accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, a wireless positioning technology is widely applied to a plurality of scenarios such as a remote positioning scenario and a device ranging scenario. Currently, common wireless positioning technologies include, for example, positioning technologies based on UWB/millimeter wave, an electromagnetic field, and optical tracking. However, these positioning technologies are affected by environmental conditions, design, and the like, commonly resulting in problems such as positioning signal coverage gap.

For example, based on antenna directivity, an antenna configured in an electronic device may include a directional antenna or an omnidirectional antenna. The directional antenna is widely used in a positioning process of the electronic device because of a signal propagation distance and anti-interference performance of the directional antenna. However, due to limitations in consistency between antenna performance and an environment, in common azimuth measurement in a wireless positioning process, azimuth data obtained by the electronic device through measurement in some directions cannot effectively one-to-one correspond to actual values. As a result, when a user starts measurement from these locations, an effective location cannot be located.

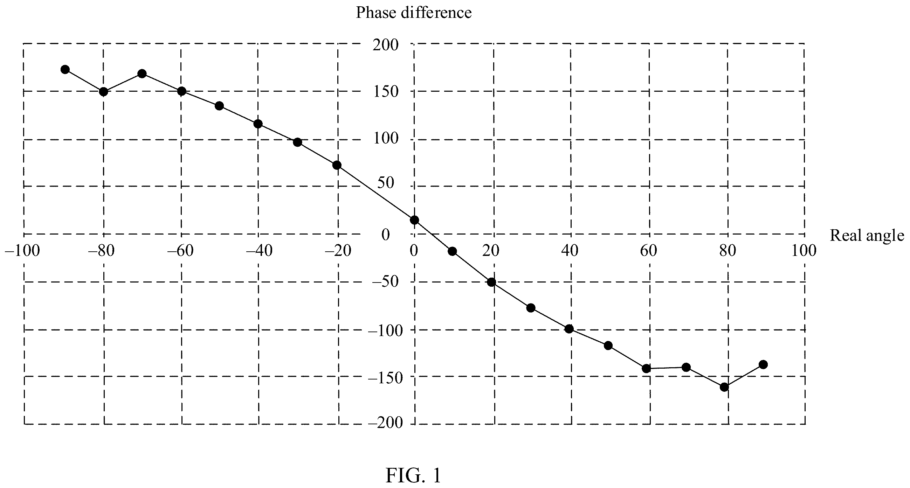

For example, as shown in FIG. 1, a phase difference measurement value at a real angle ranging from -70° to -90° easily overlaps a phase difference measurement value at a real angle ranging from -60° to -70°. In this case, when the electronic device starts to perform measurement by using these real angles as initial locations, a problem that obtained measurement values cannot be in a one-to-one correspondence with actual real angles occurs. Consequently, a positioning exception occurs.

Optionally, an area in which the electronic device can obtain accurate azimuth data is described as an effective positioning signal area, and an area in which the electronic device cannot obtain accurate azimuth data is described as an abnormal positioning signal area.

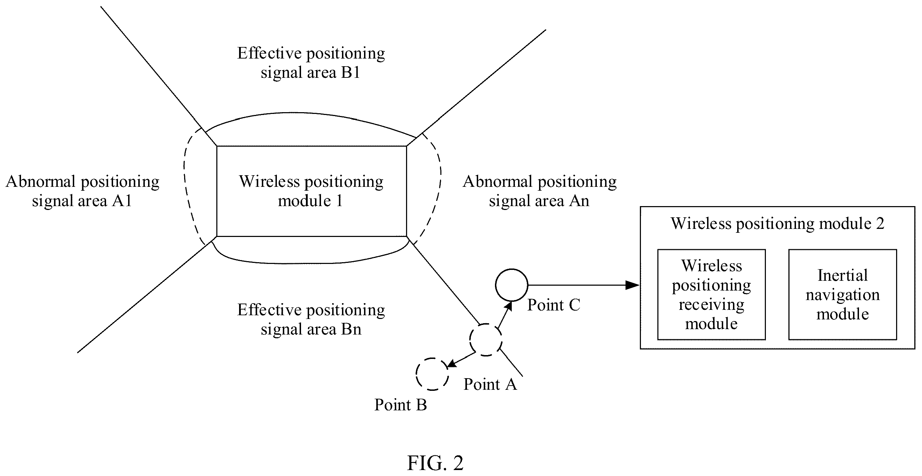

For example, as shown in FIG. 2, a wireless positioning module (for example, a wireless positioning module 1) is configured in the electronic device. Limited by performance of the wireless positioning module 1, the electronic device has one or more effective positioning signal areas and one or more abnormal positioning signal areas. In a positioning process, a positioning device can accurately position a positioned device via the wireless positioning module only when the positioned device is located in the effective positioning signal area of the positioning device.

To resolve the foregoing problem that effective positioning cannot be obtained due to the abnormal positioning signal area, an inertial measurement unit (inertial measurement unit, IMU) is usually configured in the electronic device, and the IMU is used to assist the electronic device in positioning and tracking. Alternatively, more wireless positioning modules are configured in the electronic device or a plurality of antenna groups are switched via a switch, to implement coverage of the effective positioning signal areas.

For example, as shown in FIG. 2, a wireless positioning receiving module and an inertial navigation module (namely, the IMU) are configured in a wireless positioning module 2 of the positioned device. The inertial navigation module includes an accelerometer and a gyroscope. The accelerometer is configured to detect accelerations of the positioned device on an x-axis, a y-axis, and a z-axis, and a short-time movement status of the positioned device may be determined by converting the collected accelerations into displacement of the positioned device. The gyroscope is configured to detect angular rates of the positioned device on the x-axis, the y-axis, and the z-axis, and a displacement status of the positioned device may be determined by converting the collected angular rates into displacement of the positioned device. The inertial navigation module in the positioned device tracks location movement information of the device via the accelerometer and the gyroscope, to implement location tracking in the abnormal positioning signal area.

For example, as shown in FIG. 2, starting from entering the effective positioning signal area (for example, starting from a point A), the positioning device positions a location change ΔS1 of the positioned device in real time, and the IMU in the positioned device may calculate a moving track ΔS2 of the positioned device in this time period. The positioning device determines whether an error between ΔS1 and ΔS2 falls within a preset range, to determine whether a wireless positioning signal is effective in this time. Then, the positioning device performs continuous short-time tracking and determining, and may continue to track a posture of the positioned device via the inertial navigation module when the positioned device moves to the abnormal positioning signal area.

However, in the foregoing IMU-based positioning process, an initial location of the positioned device needs to be in the effective positioning signal area, to ensure positioning accuracy. If the initial location of the positioned device is in the abnormal positioning signal area, before the positioned device moves into the effective positioning signal area, all obtained positioning data is abnormal, and accurate positioning cannot be implemented.

In addition, in the effective positioning signal area, due to interference of the wireless positioning signal, in an actual positioning process, the positioning device also needs to perform filtering and parsing for a long time, to determine the initial location of the positioned device. It takes a long time to position the initial location and a success rate is low.

In addition, after the positioning device determines the initial location of the positioned device in the effective positioning signal area, the positioned device moves to the abnormal positioning signal area. If the positioned device stays in the abnormal positioning signal area for a short time, the positioning device can accurately position the positioned device via the IMU. However, if the positioned device stays in the abnormal positioning signal area for a long time, as time accumulates, a problem that accurate and effective positioning data cannot be obtained due to an excessively large deviation of accumulated positioning data occurs in IMU-based location tracking. Consequently, a positioning exception occurs.

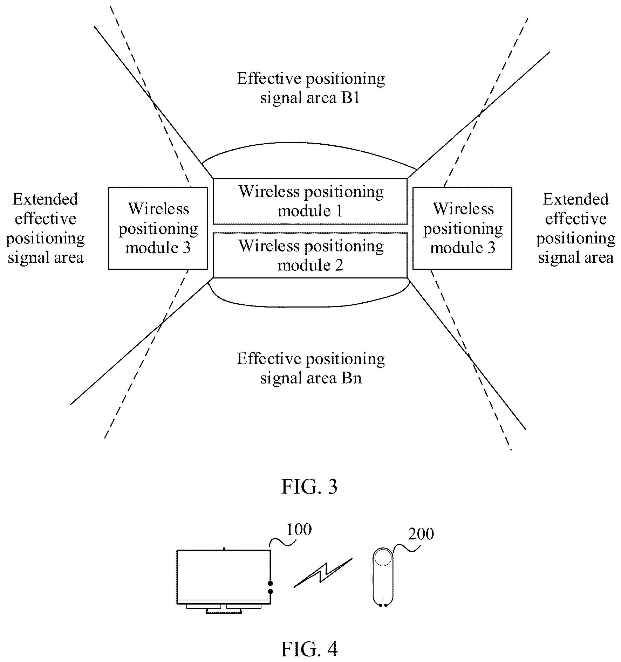

For another example, as shown in FIG. 3, a plurality of wireless positioning modules are configured in the positioning device, to extend a coverage area of the effective positioning signal area, so as to ensure that movement of the positioned device is still in the effective positioning signal area, thereby meeting a requirement for accurate positioning.

However, disposing a plurality of wireless positioning modules in the electronic device not only increases costs, but also greatly increases an overall stacking size of the electronic device. In addition, in a closed indoor environment, due to an excessively large effective positioning signal area, the positioning device easily determines parsed locations of a plurality of positioned devices. This affects final positioning effect.

Therefore, this application provides a positioning method, so that an initial location of a positioned second electronic device can be quickly determined based on a positioning signal of an auxiliary determining unit preconfigured in a first electronic device and/or a positioning signal of an auxiliary determining unit preconfigured in the second electronic device, to effectively improve a positioning success rate, and greatly shorten positioning time of an initial abnormal location.

FIG. 4 is a diagram of a communication system to which a positioning method is applied according to an embodiment of this application. As shown in FIG. 4, the communication system includes a first electronic device 100 and a second electronic device 200.

Optionally, the first electronic device 100 or the second electronic device 200 may be, for example, a mobile phone, a tablet computer, a notebook computer, a smart screen, a remote control handle, a wearable device, a vehicle-mounted terminal, an ultra-mobile personal computer (ultra-mobile personal computer, UMPC), a netbook, a personal digital assistant (personal digital assistant, PDA), or an artificial intelligence (artificial intelligence, AI) device. An operating system installed on the first electronic device 100 or the second electronic device 200 includes but is not limited to iOS^{®}, Android^{®}, HarmonyOS^{®}, Windows^{®}, Linux^{®}, or another operating system. Specific types of the first electronic device 100 and the second electronic device 200 and installed operating systems are not limited in this application.

In some embodiments, a wireless communication connection is established between the first electronic device 100 and the second electronic device 200. A wireless communication technology for establishing a wireless communication connection includes but is not limited to at least one of the following: Bluetooth (Bluetooth, BT) (for example, conventional Bluetooth or Bluetooth low energy (Bluetooth low energy, BLE) Bluetooth), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), and the like.

Optionally, a communication connection may alternatively be established between the first electronic device 100 and the second electronic device 200 through a third-party device in a local area network. The third-party device is, for example, a router, a gateway, a smart device controller, or a server.

In some other embodiments, a wired communication connection may alternatively be established between the first electronic device 100 and the second electronic device 200. For example, the first electronic device 100 and the second electronic device 200 are connected through a universal serial bus (universal serial bus, USB) interface.

Optionally, the first electronic device 100 is, for example, a positioning device, and the second electronic device 200 is, for example, a positioned device. Optionally, in a remote control scenario, the first electronic device 100 is, for example, a controlled display end (for example, a smart screen), and the second electronic device 200 is, for example, a remote control end (for example, a remote control handle). The first electronic device 100 determines, by positioning the second electronic device 200, whether to respond to an indication signal sent by the second electronic device 200.

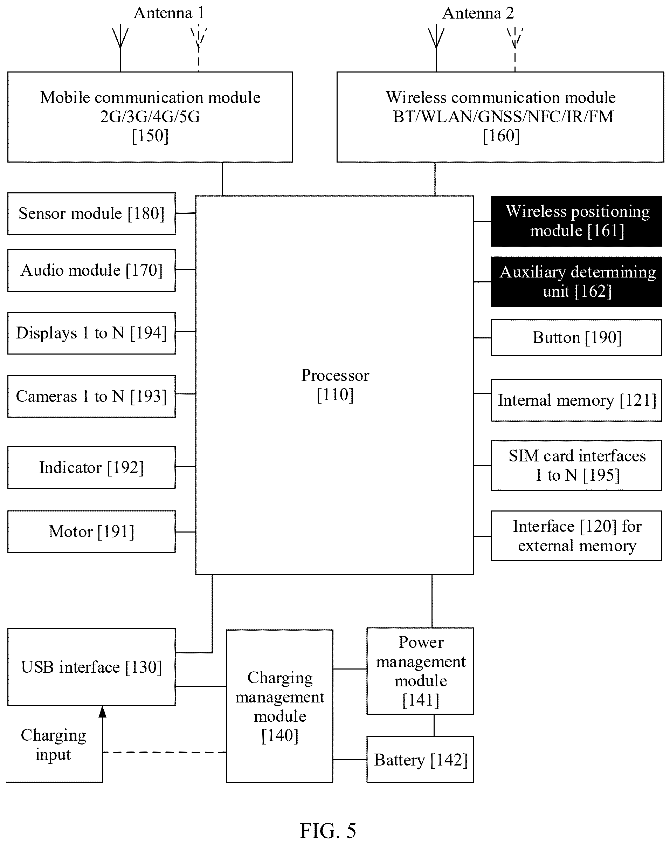

Optionally, the first electronic device 100 and the second electronic device 200 in embodiments of this application may be implemented by using different devices, and the different devices may have same, similar, or different hardware structures, for example, a hardware structure shown in FIG. 5.

For example, an example in which the first electronic device 100 has the hardware structure shown in FIG. 5 is used to describe the hardware structure shown in FIG. 5.

As shown in FIG. 5, the first electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, a wireless positioning module 161, an auxiliary determining unit 162, an audio module 170, a sensor module 180, a button 190, a motor 191, an indicator 192, a camera 193, a display 194, a subscriber identity module (subscriber identity module, SIM) card interface 195, and the like.

It may be understood that a structure shown in this embodiment of this application does not constitute a specific limitation on the first electronic device 100. In some other embodiments of this application, the first electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100. The processor 110 communicates with the display 194 through the DSI interface, to implement a display function of the first electronic device 100.

The USB interface 130 is an interface that conforms to a USB standard specification, and may be specifically a mini USB interface, a micro USB interface, a USB type-C interface, or the like. The USB interface 130 may be configured to connect to a charger to charge the first electronic device 100, or may be configured to transmit data between the first electronic device 100 and a peripheral device, or may be configured to connect to a headset for playing audio through the headset. The interface may be further configured to connect to another electronic device like an AR device.

It may be understood that, an interface connection relationship between the modules shown in this embodiment of this application is merely an example for description, and does not constitute a structural limitation on the first electronic device 100. In some other embodiments of this application, the first electronic device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the first electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the first electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite-based augmentation systems, SBAS).

The wireless positioning module 161 is configured to implement a positioning function of the first electronic device 100. For example, the second electronic device 200 is positioned by using positioning technologies such as UWB/millimeter wave, an electromagnetic field, and optical tracking. For example, the wireless positioning module 161 is any one of the following: an electromagnetic positioning module, a UWB positioning module, a millimeter-wave positioning module, and an optical tracking positioning module.

A signal coverage area of the wireless positioning module 161 is 360 degrees. One part of the signal coverage area is an effective positioning signal area, and the other part is an abnormal positioning signal area.

The auxiliary determining unit 162 is an optical transceiver unit, and an optical transceiver angle of the auxiliary determining unit 162 can match a coverage angle of the effective positioning signal area/the abnormal positioning signal area of the wireless positioning module 161 through structural constraints. In this way, clear area determining is implemented in the determined effective positioning signal area/abnormal positioning signal area.

Optionally, the auxiliary determining unit 162 is a module configured to transmit or receive an optical signal, for example, an invisible light emitting diode, an invisible light receiving diode, or a camera.

Optionally, an optical transceiver angle of the auxiliary determining unit 162 disposed in a signal area (for example, the effective positioning signal area or the abnormal positioning signal area) is less than or equal to a signal coverage angle of the signal area. Therefore, after receiving or sending an optical signal, the auxiliary determining unit 162 can determine that a peer device is located within a corresponding signal area. Optionally, when the optical transceiver angle of the auxiliary determining unit 162 is less than a signal coverage angle of the corresponding signal area, a difference between the optical transceiver angle and the signal coverage angle is greater than or equal to a preset angle threshold. For example, the optical transceiver angle of the auxiliary determining unit 162 is less than the signal coverage angle of the corresponding signal area by no more than 5 degrees. In this way, a waste of the effective signal positioning area is avoided, and positioning accuracy is improved.

Optionally, one or more auxiliary determining units 162 are disposed in at least one of different effective positioning signal areas or abnormal positioning signal areas, and different auxiliary determining units 162 are disposed in different effective positioning signal areas or abnormal positioning signal areas. Optionally, different auxiliary determining units 162 are configured to indicate that optical signal features of the auxiliary determining units 162 are different.

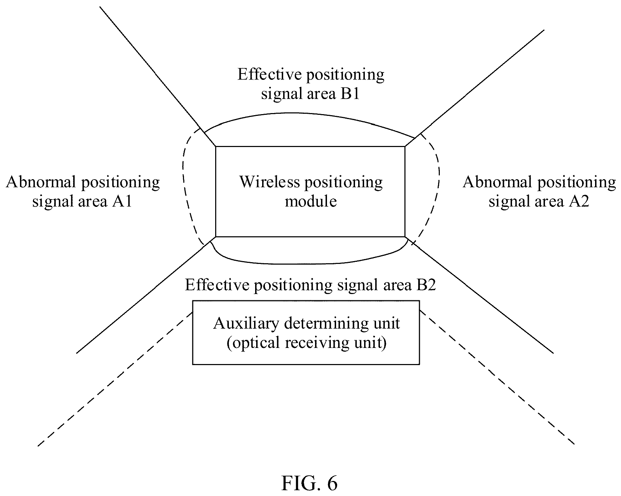

For example, as shown in FIG. 6, the signal coverage area of the wireless positioning module includes two effective positioning signal areas, for example, an effective positioning signal area B1 and an effective positioning signal area B2, and two abnormal positioning signal areas, for example, an abnormal positioning signal area A1 and an abnormal positioning signal area A2. The auxiliary determining unit is disposed in the effective positioning signal area B2. The auxiliary determining unit is an optical receiving unit, and may be configured to receive an optical signal transmitted to the effective positioning signal area B2, and does not receive an optical signal transmitted to another effective positioning signal area or an abnormal positioning signal area. In this way, a coverage area of the effective positioning signal area B2 is clearly determined based on a light receiving angle of the auxiliary determining unit. Subsequently, the first electronic device 100 first determines, based on an optical signal receiving status of the auxiliary determining unit, whether the second electronic device 200 is located in the effective positioning signal area B2, and then performs further positioning, to improve a speed of determining an initial location of the second electronic device 200.

In some examples, a wireless positioning module and an auxiliary determining unit are also configured in the second electronic device 200, and the wireless positioning module and the auxiliary determining unit cooperate with the auxiliary determining unit in the first electronic device 100 to determine the location of the second electronic device 200.

Optionally, when light emission can be performed, auxiliary determining units disposed in different signal areas may emit optical signals obtained through feature adjustment. In this way, after receiving an emitted light, the auxiliary determining unit configured in the electronic device may determine, based on a feature of the received optical signal, a signal area in which the peer device transmits the optical signal, to determine a location relationship between the electronic device and the peer device. For example, the electronic device determines which signal area of the peer device the electronic device is located in.

Optionally, the auxiliary determining unit may perform feature adjustment on the transmitted optical signal through frequency adjustment, amplitude modulation, or the like.

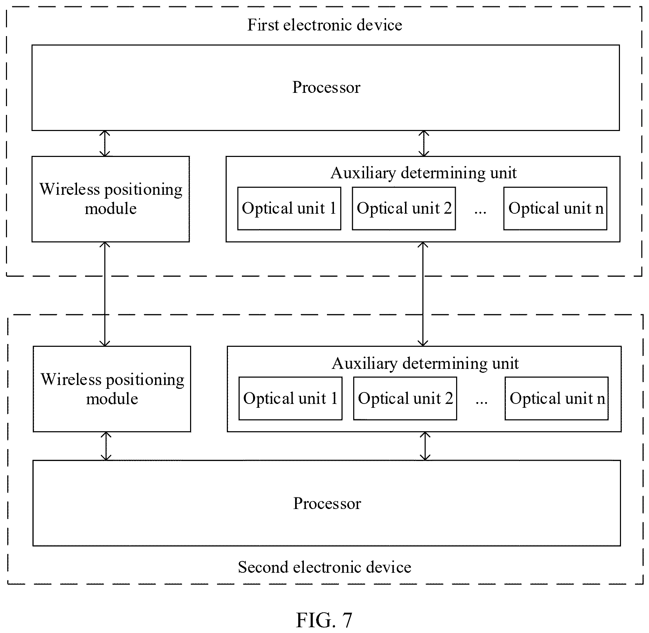

For example, as shown in FIG. 7, a processor, a wireless positioning module, and an auxiliary determining unit are configured in each of the first electronic device 100 and the second electronic device 200. The auxiliary determining unit includes one or more optical units, and the optical unit is configured to transmit an optical signal or receive an optical signal.

For example, the auxiliary determining unit in the first electronic device 100 is an optical receiving unit, and the auxiliary determining unit in the second electronic device 200 is an optical transmitting unit. In this way, the first electronic device 100 cooperates with the second electronic device 200. After receiving, via the auxiliary determining unit, an optical signal transmitted by the second electronic device 200, the first electronic device 100 may determine, via the processor, an auxiliary determining unit that is in a signal area of the second electronic device 200 and that transmits the optical signal, and an auxiliary determining unit that is in a signal area and that receives the optical signal.

When an optical signal transmitted by an auxiliary determining unit located in an effective positioning signal area is received by the peer device, or when an auxiliary determining unit located in an effective positioning signal area receives an optical signal (that is, when effective positioning data exists on either the first electronic device 100 or the second electronic device 200), positioning may be performed via the first electronic device 100 or the second electronic device 200 to which the effective positioning signal area belongs.

For example, when determining that the auxiliary determining unit located in the effective positioning signal area receives the optical signal, the processor of the first electronic device 100 may determine that the second electronic device 200 is located in the effective positioning signal area of the first electronic device. In this case, the first electronic device 100 may determine the location of the second electronic device 200 via the wireless positioning module.

In some embodiments, the wireless positioning module 161 and the auxiliary determining unit 162 may be independent modules. Alternatively, the wireless positioning module 161 includes the auxiliary determining unit 162.

The first electronic device 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the first electronic device 100 may include one or N displays 194, where N is a positive integer greater than 1.

The camera 193 is configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 may include one or N cameras 193, where N is a positive integer greater than 1.

The interface 120 for external memory may be configured to connect to an external memory card, for example, a micro SD card, to expand a storage capability of the first electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the first electronic device 100 and data processing.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110. The first electronic device 100 may use the audio module 170 to implement music playing, recording, and the like. The audio module 170 may include a loudspeaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be configured to provide an incoming call vibration prompt and a touch vibration feedback. The motor 191 may also correspond to different vibration feedback effect for touch operations performed on different areas of the display 194. Different application scenarios (for example, a time reminder, information receiving, an alarm clock, and a game) may also correspond to different vibration feedback effect.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the first electronic device 100. The first electronic device 100 may support one or N SIM card interfaces, where N is a positive integer greater than 1.

The positioning method provided in embodiments of this application is described in detail by using an example in which the first electronic device is a positioning device, the auxiliary determining unit disposed in the wireless receiving module is configured to receive an optical signal, the second electronic device is a positioned device, the auxiliary determining unit disposed in the wireless receiving module is configured to transmit an optical signal, and the first electronic device and the second electronic device each include two effective positioning signal areas and two abnormal positioning signal areas shown in FIG. 6.

It should be understood that the auxiliary determining unit disposed in the wireless receiving module of the first electronic device may alternatively be configured to transmit an optical signal, and the auxiliary determining unit disposed in the wireless receiving module of the second electronic device may alternatively be configured to receive an optical signal. In this case, for the positioning method between the first electronic device and the second electronic device, refer to the positioning method in the following embodiments. Details are not described in this embodiment of this application.

In addition, the first electronic device and the second electronic device may have more or fewer effective positioning signal areas and abnormal positioning signal areas based on different wireless positioning modules configured for the first electronic device and the second electronic device. This is not limited in embodiments of this application.

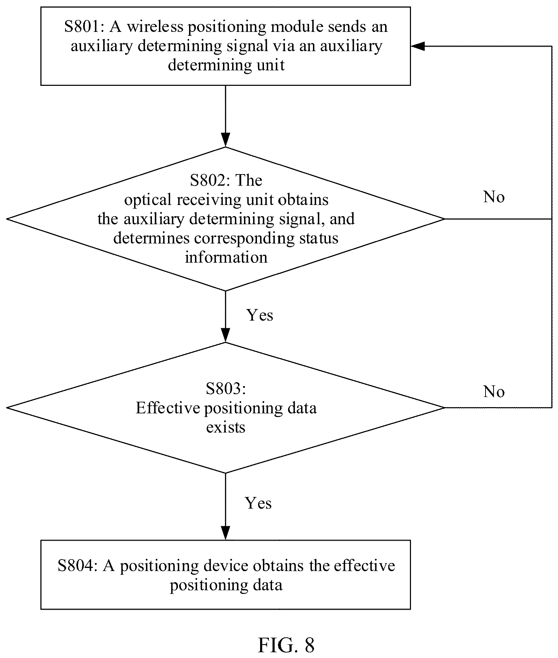

FIG. 8 is a schematic flowchart of a positioning method according to an embodiment of this application. It should be noted that the method is not limited to a specific sequence described in FIG. 8 and below. It should be understood that in another embodiment, a sequence of some steps in the method may be exchanged based on an actual requirement, or some steps in the method may be omitted or deleted. The method includes the following steps.

S801: A wireless positioning module sends an auxiliary determining signal via an auxiliary determining unit.

In some embodiments, an auxiliary determining unit disposed in a wireless receiving module of a second electronic device is configured to transmit an auxiliary determining signal. In response to a user operation, the second electronic device transmits the auxiliary determining signal via the auxiliary determining unit.

Optionally, the auxiliary determining signal is an optical signal. The auxiliary determining unit may perform feature adjustment on a sent optical signal through frequency adjustment, amplitude modulation, or the like. Alternatively, the auxiliary determining signal carries different information used to distinguish a signal area in which the auxiliary determining unit sending the auxiliary determining signal is located. For example, different identifiers are preset for different signal areas of the wireless positioning module, and the auxiliary determining signal sent by the auxiliary determining unit carries an identifier of the signal area in which the auxiliary determining unit is located.

The following describes in detail the positioning method provided in embodiments of this application by using an example in which the auxiliary determining signal is an optical signal.

Optionally, the optical signal transmitted by the second electronic device is an optical signal obtained through adjustment, and a feature of the optical signal transmitted by the second electronic device has been configured in a first electronic device. In this way, after receiving the optical signal, the first electronic device can determine, based on a preset feature of the optical signal, whether the received optical signal is the optical signal sent by the second electronic device, and determine that the optical signal is an optical signal sent by an auxiliary determining unit in which signal area of the second electronic device.

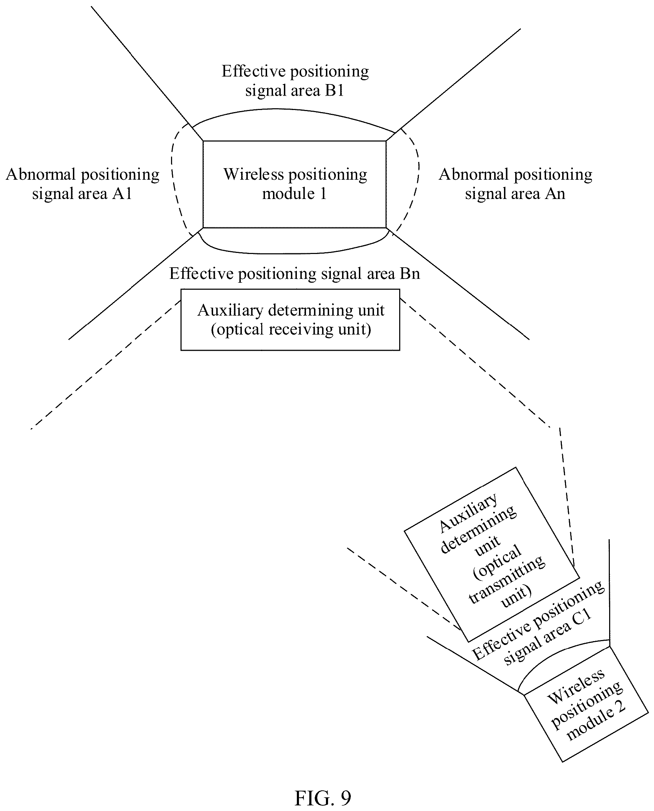

For example, as shown in FIG. 9, a wireless positioning module 1 is disposed in the first electronic device, and an auxiliary determining unit is disposed in an effective positioning signal area Bn of the wireless positioning module 1. The auxiliary determining unit is an optical receiving unit, and a receiving angle of light is less than or equal to a signal coverage angle of the effective positioning signal area Bn. Therefore, through structural constraints for the auxiliary determining unit, all optical signals received by the auxiliary determining unit are optical signals transmitted to the effective positioning signal area Bn. That is, the device that transmits the optical signal is located in the effective positioning signal area Bn of the first electronic device, and the first electronic device may obtain effective positioning data.

A wireless positioning module 2 is disposed in the second electronic device, and an auxiliary determining unit is disposed in an effective positioning signal area C1 of the wireless positioning module 2. The auxiliary determining unit is an optical transmitting unit, and a light transmission angle is less than or equal to a signal coverage angle of the effective positioning signal area C1. Therefore, through structural constraints for the auxiliary determining unit, all optical signals transmitted by the auxiliary determining unit are optical signals within coverage of the effective positioning signal area C1. That is, a device that receives the optical signal is located in the effective positioning signal area C1 of the second electronic device, and the second electronic device may obtain effective positioning data.

For example, the first electronic device is a smart screen, and the second electronic device is a remote control handle. As shown in FIG. 9, the wireless positioning module 1 is configured in the smart screen. A forward direction of the smart screen corresponds to the effective positioning signal area Bn. A user is located in a signal coverage area of the effective positioning signal area Bn, and may control the smart screen via the remote control handle. The smart screen can accurately position the remote control handle. However, if the user is located in a signal coverage area of an abnormal positioning signal area A1 or an abnormal signal positioning signal area An, when the smart screen cannot accurately position the remote control handle, the user cannot control the smart screen via the remote control handle. The wireless positioning module 2 is disposed in the remote control handle, a forward direction of the remote control handle corresponds to the effective positioning signal area C1, and an optical transmitting unit is disposed in the effective positioning signal area C1. In response to an operation performed by the user on a button, the remote control handle sends an optical signal via the light transmitting unit.

S802: The optical receiving unit obtains the auxiliary determining signal, and determines corresponding status information. If the optical receiving unit obtains the auxiliary determining signal, and determines the corresponding status information, step S803 is performed; or if the optical receiving unit does not obtain the auxiliary determining signal, and does not determine the corresponding status information, step S801 is performed.

Optical receiving units with different signal features are disposed in the effective positioning signal area and the abnormal positioning signal area of the wireless positioning module of the first electronic device. Similarly, optical transmitting units with different signal features are disposed in the effective positioning signal area and the abnormal positioning signal area of the wireless positioning module of the second electronic device. In this way, after receiving the optical signal, the first electronic device can determine corresponding status information based on the feature of the received optical signal and a feature of the optical receiving unit that receives the optical signal.

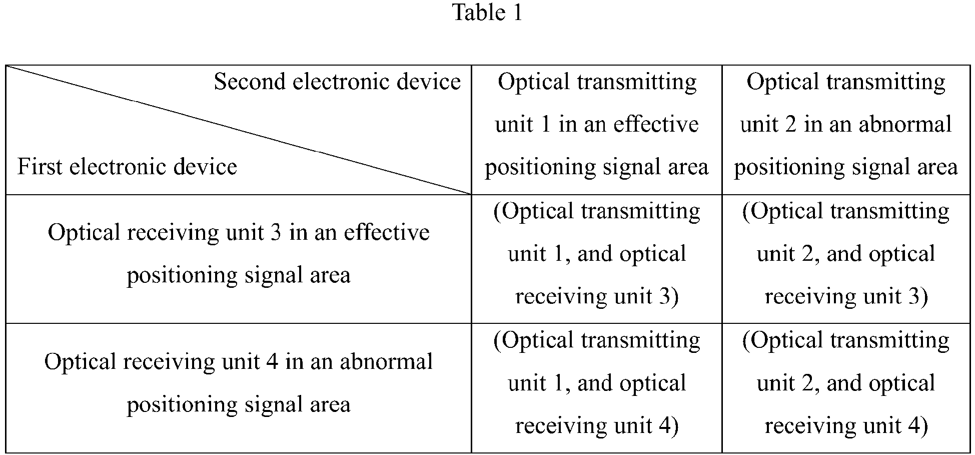

For example, as shown in Table 1, a signal area of the wireless positioning module 1 in the first electronic device includes the effective positioning signal area and the abnormal positioning signal area. The optical receiving unit 3 is disposed in the effective signal positioning area, and the optical receiving unit 4 is disposed in the abnormal positioning signal area. A signal area of the wireless positioning module 2 in the second electronic device includes the effective positioning signal area and the abnormal positioning signal area. The optical transmitting unit 1 is disposed in the effective signal positioning area, and the optical transmitting unit 2 is disposed in the abnormal positioning signal area. In this case, after the wireless positioning module 1 in the first electronic device receives, via optical receiving units in different signal areas, auxiliary determining signals sent by the second electronic device via optical transmitting units in different signal areas, status information of the signal areas in which the optical transmitting units sending the auxiliary decision signals are located can be determined, and status information of the signal areas in which the optical receiving units receiving the auxiliary decision signals are located can be determined.

For example, the first electronic device receives, via the optical receiving unit 3 in the effective positioning signal area, an auxiliary determining signal sent by the second electronic device via the optical transmitting unit 1 in the effective positioning signal area, and the first electronic device may determine status information of the optical transmitting unit 1 and the optical receiving unit 3.

In some examples, the status information indicates an effective positioning signal area or an abnormal positioning signal area. A sequence of determining the status information is not limited in this embodiment of this application.

For example, the first electronic device first determines that the status information of the optical transmitting unit 1 indicates that a signal area in which the optical transmitting unit 1 sending the auxiliary determining signal is located is an effective positioning signal area. Then, the first electronic device determines that the status information of the optical receiving unit 3 indicates that a signal area in which the optical receiving unit 3 receiving the auxiliary determining signal is located is an effective positioning signal area.

Alternatively, the first electronic device first determines that the status information of the optical receiving unit 3 indicates that a signal area in which the optical receiving unit 3 receiving the auxiliary determining signal is located is an effective positioning signal area. Then, the first electronic device determines that the status information of the optical transmitting unit 1 indicates that a signal area in which the optical transmitting unit 1 sending the auxiliary determining signal is located is an effective positioning signal area.

Alternatively, the first electronic device first generates a feature combination for the optical transmitting unit 1 and the optical receiving unit 3, and then the first electronic device determines status information of the feature combination, for example, a feature combination of the effective positioning signal area and the effective positioning signal area.

It should be understood that the first electronic device and the second electronic device may choose to dispose at least one of the optical transmitting unit or the optical receiving unit in partial areas of the effective positioning signal area and the abnormal positioning signal area. Therefore, the obtained status information is a part or all of the status information in the example in Table 1. In addition, if the first electronic device and the second electronic device have more or fewer effective positioning signal areas and abnormal positioning signal areas, more status information may be generated. Examples are not provided one by one herein.

For example, in the scenario shown in FIG. 9, the optical transmitting unit 1 is disposed in the effective positioning signal area C1 of the second electronic device, and is configured to transmit an optical signal at a frequency f1. The optical receiving unit 3 is disposed in the effective positioning signal area Bn of the first electronic device. When the optical receiving unit 3 receives the optical signal at the frequency f1 transmitted by the optical transmitting unit 1, the first electronic device may determine that the status information (Optical transmitting unit 1, and optical receiving unit 3) is received. In this case, after obtaining the status information, the first electronic device may determine whether effective positioning data exists (that is, perform the following step S803). When the first electronic device does not obtain the status information, step S801 may be returned.

In some embodiments, after obtaining the status information, the first electronic device may synchronize the status information to the second electronic device, to facilitate subsequent obtaining of effective positioning data. In addition, the first electronic device may notify, by sending the status information, the second electronic device that the first electronic device has received the optical signal sent by the second electronic device.

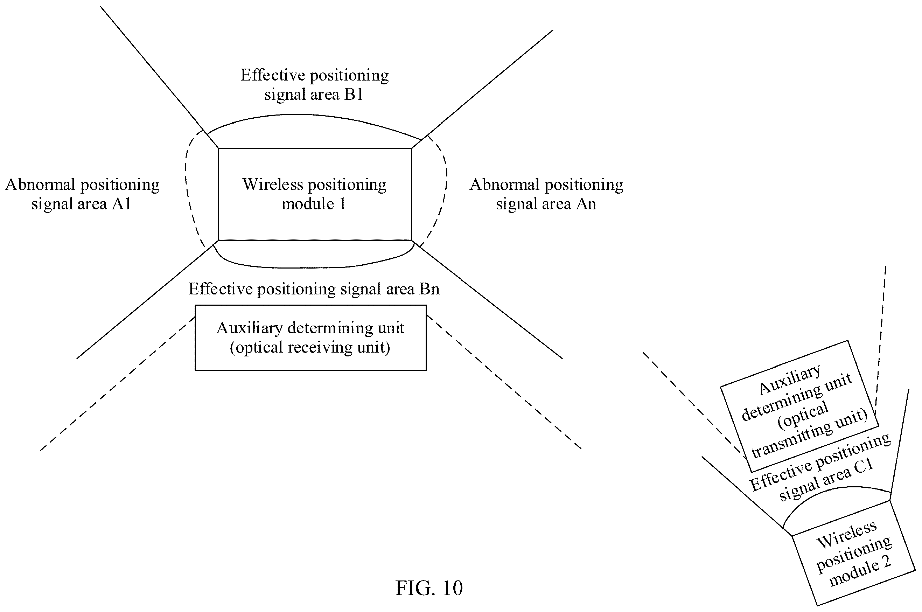

For example, as shown in FIG. 10, in response to a user operation, the second electronic device sends the optical signal via the auxiliary determining unit disposed in the effective positioning signal area C1. Because the second electronic device is located in the abnormal signal area An of the first electronic device, and no auxiliary determining unit is disposed in the abnormal signal area An of the first electronic device, the optical signal sent by the second electronic device cannot be received. Therefore, the first electronic device cannot obtain the status information within preset time after the second electronic device sends the optical signal, and cannot feed back the status information to the second electronic device. Therefore, if the second electronic device does not receive, within the preset time after transmitting the optical signal, the status information fed back by the first electronic device, step S801 may be returned. For example, the second electronic device prompts the user to move a location and perform an operation again, to trigger control of the first electronic device. Alternatively, the first electronic device is not controlled for a long time, and the user may operate the second electronic device again to control the first electronic device.

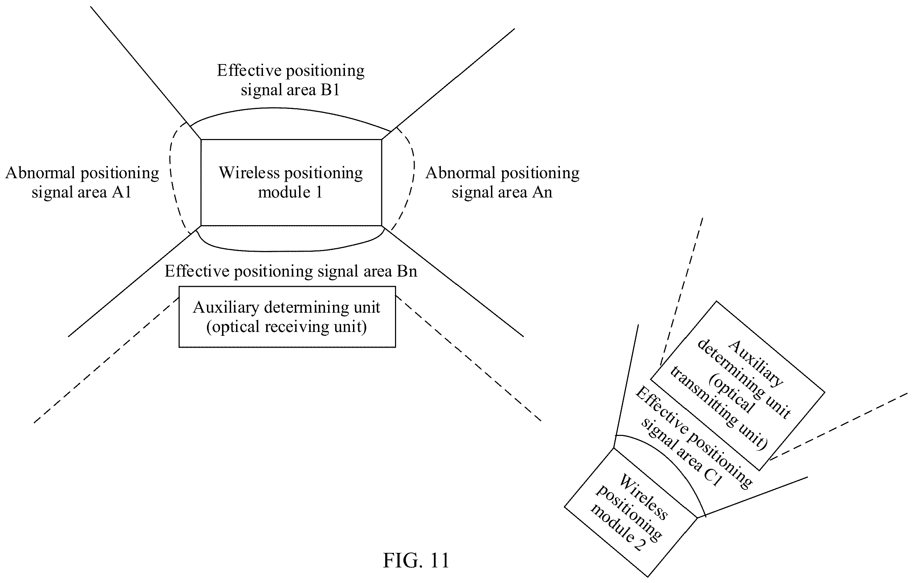

For another example, as shown in FIG. 11, in response to a user operation, the second electronic device sends the optical signal via the auxiliary determining unit disposed in the effective positioning signal area C1. A sending direction of the optical signal is neither located in the effective positioning signal area of the first electronic device nor located in the abnormal positioning signal area of the first electronic device. In this case, in a current scenario, the user may control another electronic device via the second electronic device. However, because the first electronic device cannot obtain the status information, the first electronic device does not trigger positioning, that is, does not respond to control of the second electronic device.

S803: The effective positioning data exists. If the effective positioning data exists, step S804 is performed; or if the effective positioning data does not exist, step S801 is performed.

In some embodiments, when a peer device is located in an effective positioning signal area of an electronic device, the electronic device may accurately position the peer device, that is, can obtain effective positioning data. When the peer device is located in an abnormal positioning signal area of the electronic device, the electronic device cannot accurately position the peer device, that is, cannot obtain effective positioning data. Therefore, after synchronizing the status information, the first electronic device and the second electronic device may determine whether the peer device is located in the effective positioning signal area, to determine whether the first electronic device and the second electronic device can obtain the effective positioning data. After determining that the effective positioning data can be obtained, either of the first electronic device and the second electronic device may output the effective positioning data, that is, the following step S804 is performed. When neither the first electronic device nor the second electronic device can obtain the effective positioning data, it indicates that the positioning process is abnormal, and the user needs to operate the second electronic device again to trigger control of the first electronic device again, that is, step S801 is returned.

For example, corresponding to generation of the status information shown in Table 1, different status information may correspond to different existence results of effective positioning data as shown in Table 2.

**Table 2**

| Status information | Whether effective location data exists |
|---|---|
| (Optical transmitting unit 1, and optical receiving unit 3) | Effective positioning data exists at two ends |
| (Optical transmitting unit 1, and optical receiving unit 4) | Effective positioning data exists at the second electronic device |
| (Optical transmitting unit 2, and optical receiving unit 3) | Effective positioning data exists at the first electronic device |
| (Optical transmitting unit 2, and optical receiving unit 4) | No effective location data exists |

For example, the optical transmitting unit 1 and the optical receiving unit 3 are auxiliary determining units disposed in effective positioning signal areas of corresponding devices. Therefore, when the status information (Optical transmitting unit 1, and optical receiving unit 3) is obtained, each of the first electronic device and the second electronic device is located in the effective positioning signal area of the peer device. In this case, positioning data used by each of the two electronic devices to position the peer device is effective positioning data.

For another example, the optical transmitting unit 1 is an auxiliary determining unit disposed in an effective positioning signal area of the second electronic device, and the optical receiving unit 4 is an auxiliary determining unit disposed in an abnormal positioning signal area of the first electronic device. Therefore, when the status information (Optical transmitting unit 1, and optical receiving unit 4) is obtained, the first electronic device is located in the effective positioning signal area of the second electronic device, and the second electronic device is located in the abnormal positioning signal area of the first electronic device. In this case, the positioning data used by the second electronic device to position the first electronic device is effective positioning data.

For another example, the optical transmitting unit 2 is an auxiliary determining unit disposed in an abnormal positioning signal area of the second electronic device, and the optical receiving unit 3 is an auxiliary determining unit disposed in the effective positioning signal area of the first electronic device. Therefore, when the status information (Optical transmitting unit 2, and optical receiving unit 3) is obtained, the first electronic device is located in the abnormal positioning signal area of the second electronic device, and the second electronic device is located in the effective positioning signal area of the first electronic device. In this case, the positioning data used by the first electronic device to position the second electronic device is effective positioning data.

For another example, the optical transmitting unit 2 and the optical receiving unit 4 are auxiliary determining units disposed in abnormal positioning signal areas of corresponding devices. Therefore, when the status information (Optical transmitting unit 2, and optical receiving unit 4) is obtained, each of the first electronic device and the second electronic device is located in the abnormal positioning signal area of the peer device. In this case, the positioning data used by each of the two electronic devices to position the peer device is abnormal positioning data.

S804: A positioning device obtains the effective positioning data.

In some embodiments, after determining, based on the status information, that the electronic device can obtain the effective positioning data, the electronic device may position the peer device via the wireless positioning module, to obtain the effective positioning data. Alternatively, the electronic device has obtained the positioning data in a process of obtaining the status information. Then, if the electronic device determines, based on the status information, that the electronic device can obtain the effective positioning data, the electronic device retains the determined effective positioning data. If the electronic device determines, based on the status information, that the electronic device cannot obtain the effective positioning data, the electronic device discards the determined positioning data.

Optionally, the wireless positioning module obtains the positioning data based on an electromagnetic wave (for example, a radio frequency band like Bluetooth/Wi-Fi/UWB/millimeter wave), an electromagnetic field (an electromagnetic field source and an electromagnetic sensor are disposed), or the like. It should be noted that, for a manner of obtaining wireless positioning data, refer to the conventional technology. This is not limited in this embodiment of this application.

In some embodiments, the second electronic device is used as a positioned device. After the effective positioning data is obtained, the effective positioning data is sent to the positioning device, namely, the first electronic device.

In some embodiments, after obtaining a group of effective positioning data determined by the first electronic device or the second electronic device, the first electronic device may determine a location of the second electronic device based on the effective positioning data.

Alternatively, the first electronic device determines the effective positioning data, and receives the effective positioning data sent by the second electronic device. In this case, the first electronic device may select any group of effective positioning data, to determine the location of the second electronic device, or determine the retained effective positioning data according to a preset rule. For example, in the scenario shown in FIG. 9, the first electronic device is the smart screen, and a direction of the back of the smart screen is an effective positioning signal area B1. If the second electronic device is located in the effective positioning signal area B1, effective positioning data obtained by the smart screen may not be used because the smart screen is not controlled by the user. Therefore, a rule that effective positioning data corresponding to the effective positioning signal area B1 is determined as positioning data that needs to be discarded may be preset in the smart screen.

In some embodiments, after obtaining the effective positioning data, the first electronic device may display a corresponding identifier, so that the user determines that the control process is effective.

In this way, the low-cost auxiliary determining unit is disposed in the signal area (for example, the effective positioning signal area or the abnormal positioning signal area), so that fast and accurate positioning can also be implemented during high-precision positioning and tracking. In this way, a problem of a positioning exception in an abnormal positioning signal area is resolved at low costs, an initial location of a positioned device is quickly determined, and user experience is improved.

In addition, when the initial location of the positioned device is an abnormal location, the effective positioning signal area may also be determined through an optical constraint of the auxiliary determining unit, to quickly determine an electronic device configured to generate effective positioning data, and greatly shorten positioning time of the initial abnormal location.

In the foregoing embodiment, an example in which one auxiliary determining unit is separately disposed in the effective positioning signal area of the first electronic device and the effective positioning signal area of the second electronic device is used to describe a positioning process. Based on the principle of the positioning process shown in FIG. 8, the following describes in detail different implementations of the positioning process with reference to different positioning scenarios.

In some embodiments, an auxiliary determining unit configured to send an optical signal is disposed in the effective positioning signal area of the wireless positioning module 2 in the second electronic device, and an auxiliary determining unit configured to receive an optical signal is separately disposed in the effective positioning signal area and the abnormal signal positioning signal area of the wireless positioning module 1 in the first electronic device. In this way, the first electronic device may determine, via the auxiliary determining unit that receives the optical signal, that the second electronic device is located in the effective positioning signal area or the abnormal positioning signal area of the first electronic device, to implement more accurate positioning.

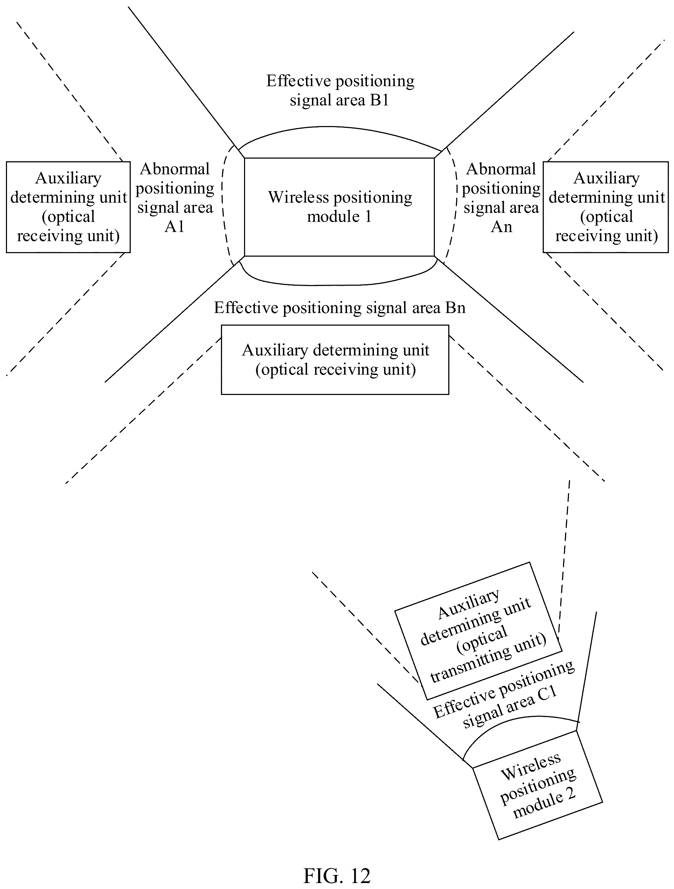

For example, as shown in FIG. 12, in response to a user operation, the second electronic device transmits, via the auxiliary determining unit (the optical transmitting unit) located in the effective positioning signal area C1, an optical signal obtained through feature adjustment. For example, a frequency of the optical signal is f1. Then, after the auxiliary determining unit (the optical receiving unit) located in the effective positioning signal area Bn in the first electronic device receives the optical signal, the first electronic device may generate corresponding status information. In addition, the first electronic device sends the status information to the second electronic device, that is, synchronizes a positioning status. The first electronic device determines, based on the status information, that the second electronic device is located in the effective positioning signal area of the first electronic device, and may generate effective positioning data. In addition, the second electronic device determines, based on the status information, that the first electronic device is located in the effective positioning signal area of the second electronic device, may generate effective positioning data, and send the effective positioning data to the first electronic device. Then, the first electronic device may determine the location of the second electronic device based on the obtained two groups of effective positioning data. For example, the first electronic device discards the effective positioning data sent by the second electronic device, and completes positioning of the second electronic device based on the effective positioning data determined by the first electronic device.

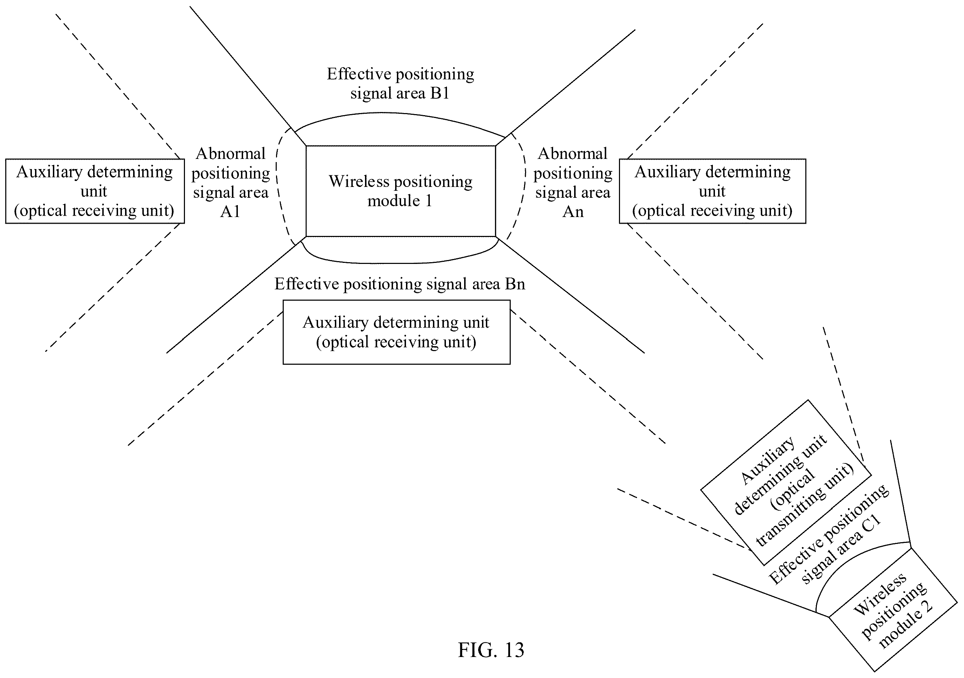

For another example, as shown in FIG. 13, in response to a user operation, the second electronic device transmits, via the auxiliary determining unit (the optical transmitting unit) located in the effective positioning signal area C1, an optical signal obtained through feature adjustment. Then, both the auxiliary determining unit (the optical receiving unit) located in the effective positioning signal area Bn and the auxiliary determining unit (the optical receiving unit) located in the abnormal positioning signal area An in the first electronic device receive the optical signal. In this case, the first electronic device may generate two groups of corresponding status information, and send the two groups of status information to the second electronic device. The first electronic device determines, based on the two groups of status information, that the second electronic device is located at a junction location between the effective positioning signal area and the abnormal positioning signal area of the second electronic device, and there is a risk of a positioning exception. The second electronic device determines, based on the two groups of status information, that the first electronic device is located in the effective signal positioning signal area of the second electronic device. Therefore, the second electronic device may generate effective positioning data, and send the effective positioning data to the first electronic device. Then, the first electronic device may determine positioning of the second electronic device based on the obtained effective positioning data sent by the second electronic device.

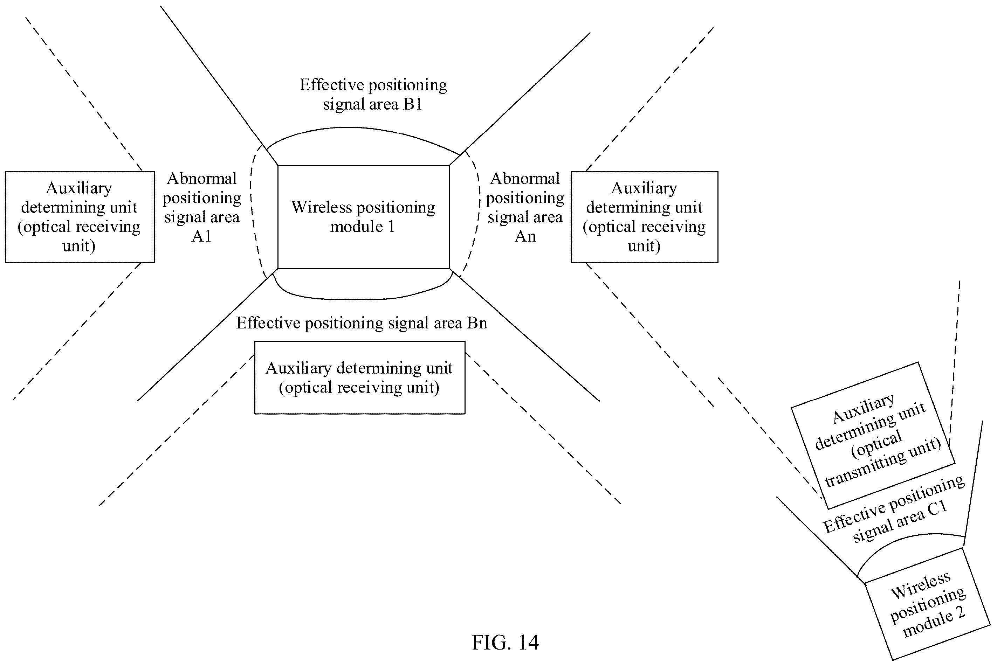

For another example, as shown in FIG. 14, in response to a user operation, the second electronic device transmits, via the auxiliary determining unit (the optical transmitting unit) located in the effective positioning signal area C1, an optical signal obtained through feature adjustment. Then, the auxiliary determining unit (the optical receiving unit) located in the abnormal positioning signal area An in the first electronic device receives the optical signal. In this case, the first electronic device may generate corresponding status information, and send the status information to the second electronic device. The first electronic device determines, based on the status information, that the second electronic device is located in the abnormal positioning signal area of the first electronic device and cannot generate effective positioning data. The second electronic device determines, based on the received status information, that the first electronic device is located in the effective signal positioning signal area of the second electronic device. Therefore, the second electronic device may generate effective positioning data, and send the effective positioning data to the first electronic device. Then, the first electronic device may determine positioning of the second electronic device based on the obtained effective positioning data sent by the second electronic device.

Optionally, if the first electronic device cannot generate effective positioning data, and cannot receive, within a preset time, the effective positioning data sent by the second electronic device, the first electronic device may determine that the current positioning fails. In this case, the user needs to re-operate the second electronic device, to re-trigger control of the first electronic device.

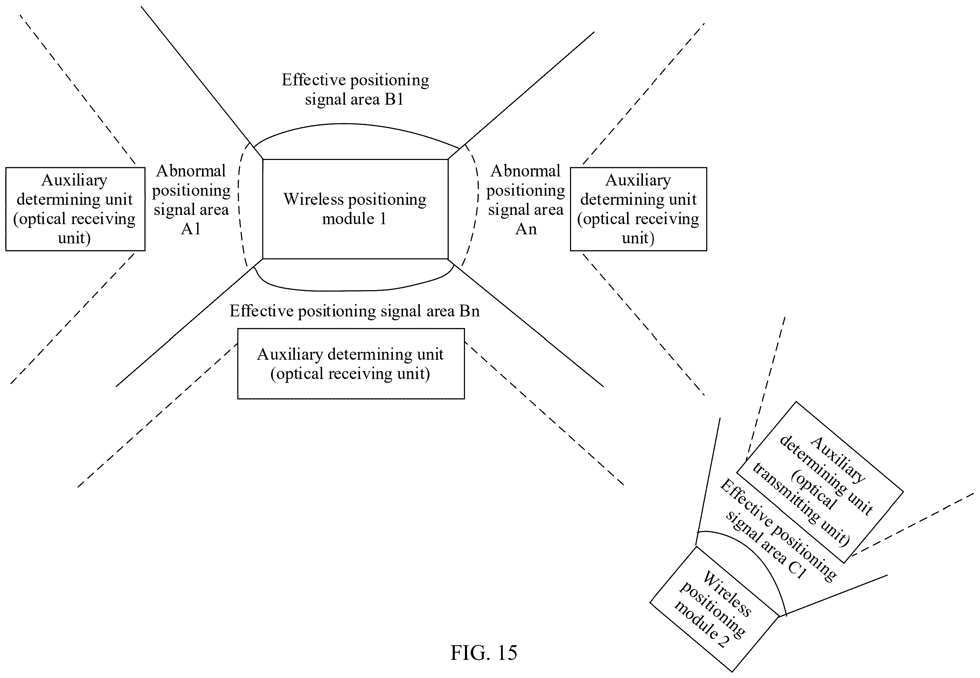

For another example, as shown in FIG. 15, in response to a user operation, the second electronic device transmits, via the auxiliary determining unit (the optical transmitting unit) located in the effective positioning signal area C1, an optical signal obtained through feature adjustment. Then, the first electronic device cannot receive the optical signal, and cannot feed back the status information to the second electronic device within a preset time. In this case, the second electronic device may determine that the current positioning fails, and the user needs to re-operate the second electronic device, to re-trigger control of the first electronic device.

In some embodiments, an auxiliary determining unit configured to send an optical signal is separately disposed in the effective positioning signal area and the abnormal signal positioning signal area of the wireless positioning module 2 in the second electronic device, and an auxiliary determining unit configured to receive an optical signal is separately disposed in the effective positioning signal area and the abnormal signal positioning signal area of the wireless positioning module 1 in the first electronic device. In addition, optical signal features of optical signals sent by the auxiliary determining units in the effective positioning signal area and the abnormal signal positioning signal area of the second electronic device are different. For example, a frequency of the optical signal sent by the auxiliary determining unit in the effective positioning signal area of the second electronic device is f1, and a frequency of the optical signal sent by the auxiliary determining unit in the abnormal signal positioning signal area is f2.

In this way, after receiving the optical signal, the first electronic device may determine a signal area in which the auxiliary determining unit receives the optical signal. In addition, the first electronic device may determine, based on a frequency of the received optical signal, that a signal area in which the optical signal is sent is the effective positioning signal area or the abnormal signal positioning signal area of the second electronic device, and generate corresponding status information. In this case, when determining that the second electronic device is located in the effective positioning signal area or the abnormal positioning signal area of the first electronic device, the first electronic device may also determine that the first electronic device is located in the effective positioning signal area or the abnormal positioning signal area of the second electronic device, to implement more accurate positioning.

Optionally, when the wireless positioning module 2 of the second electronic device has a plurality of effective positioning signal areas, optical signal features of optical signals transmitted in the plurality of effective positioning signal areas are the same or different. When the wireless positioning module 2 of the second electronic device has a plurality of abnormal positioning signal areas, optical signal features of optical signals transmitted in the plurality of abnormal positioning signal areas are the same or different.

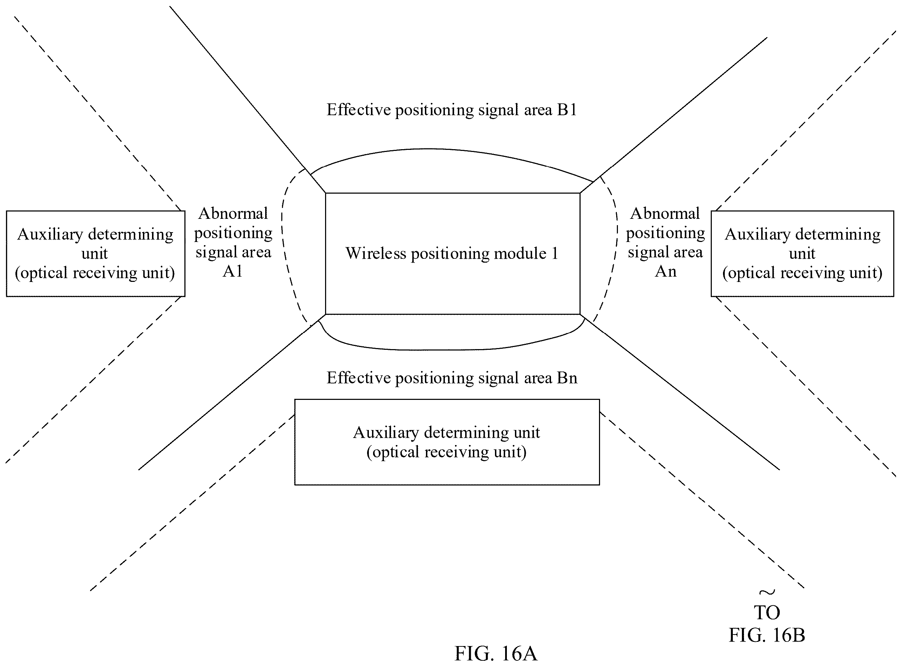

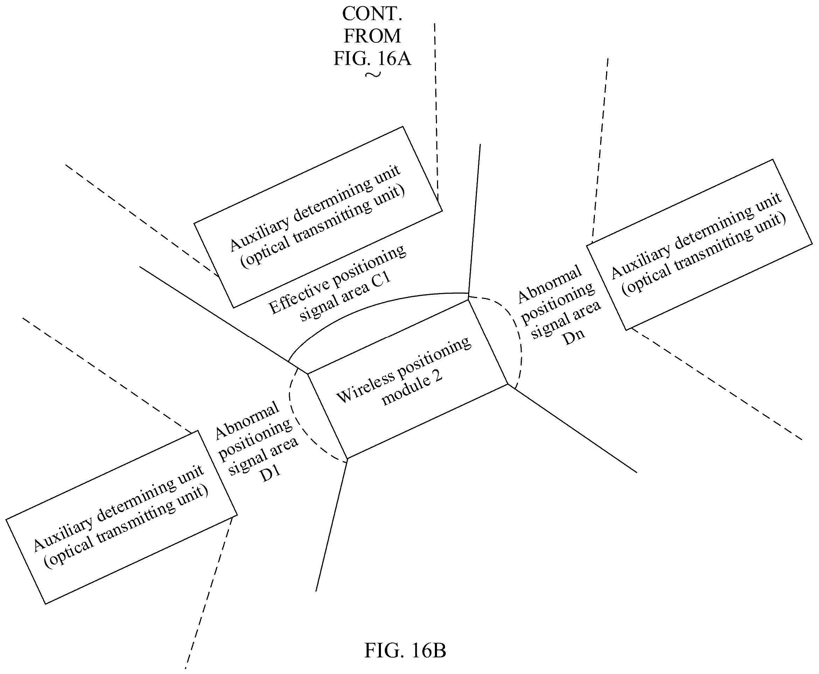

For example, as shown in FIG. 16A and FIG. 16B, in response to a user operation, the second electronic device transmits, according to a preset transmission rule via the auxiliary determining unit (the optical transmitting unit) located in the effective positioning signal area C1, an auxiliary determining unit (an optical transmitting unit) located in an abnormal positioning signal area D1, and an auxiliary determining unit (an optical transmitting unit) located in an abnormal positioning signal area Dn, optical signals obtained through feature adjustment. Optionally, the preset transmission rule includes, for example, simultaneous transmission or sequential transmission in a chronological order.

Then, after receiving the optical signal, the auxiliary determining unit (the optical receiving unit) located in the effective positioning signal area Bn in the first electronic device determines, based on an optical signal feature of the optical signal, that the auxiliary determining unit sending the optical signal is an auxiliary determining unit located in the effective positioning signal area of the second electronic device. In addition, the first electronic device may generate corresponding status information. Then, the first electronic device sends the status information to the second electronic device. The first electronic device determines, based on the status information, that the second electronic device is located in the effective positioning signal area of the first electronic device, and may generate effective positioning data. In addition, the second electronic device determines, based on the status information, that the first electronic device is located in the effective positioning signal area of the second electronic device, may generate effective positioning data, and send the effective positioning data to the first electronic device. Then, the first electronic device may determine the location of the second electronic device based on the obtained two groups of effective positioning data. For example, the first electronic device discards the effective positioning data sent by the second electronic device, and completes positioning of the second electronic device based on the effective positioning data determined by the first electronic device.

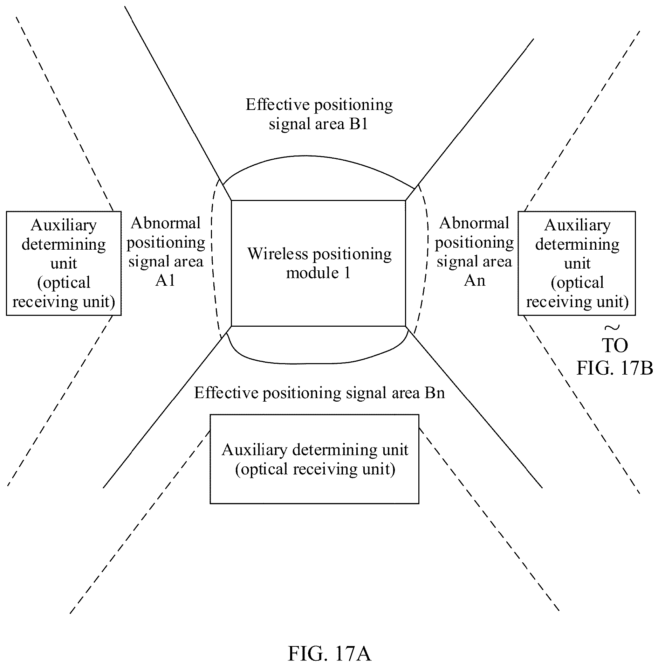

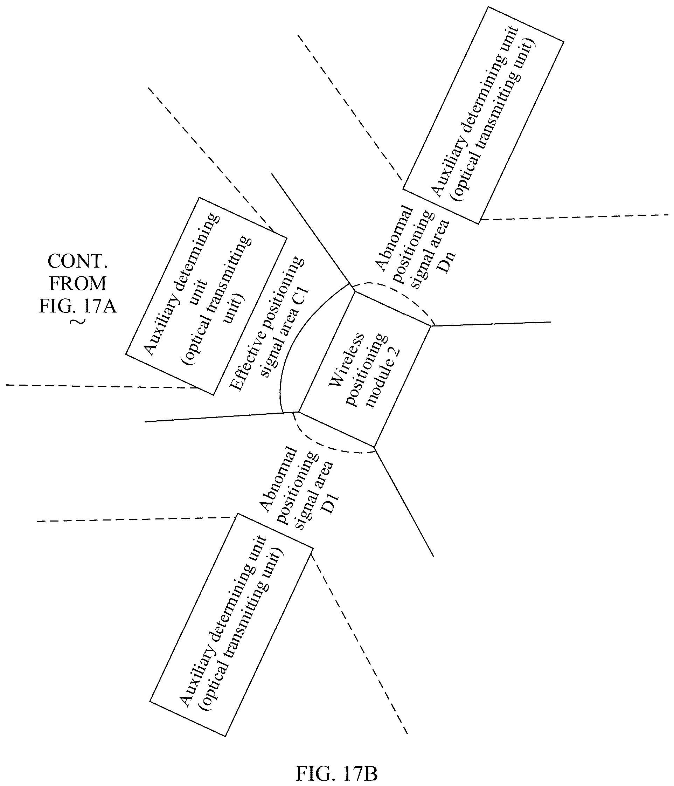

For another example, as shown in FIG. 17A and FIG. 17B, in response to a user operation, the second electronic device transmits, according to a preset transmission rule via the auxiliary determining unit (the optical transmitting unit) located in the effective positioning signal area C1, an auxiliary determining unit (an optical transmitting unit) located in an abnormal positioning signal area D1, and an auxiliary determining unit (an optical transmitting unit) located in an abnormal positioning signal area Dn, optical signals obtained through feature adjustment. Then, after receiving the optical signal, the auxiliary determining unit (the optical receiving unit) located in the abnormal positioning signal area An in the first electronic device determines, based on an optical signal feature of the optical signal, that the auxiliary determining unit sending the optical signal is an auxiliary determining unit located in the effective positioning signal area of the second electronic device. In addition, the first electronic device may generate corresponding status information. Then, the first electronic device sends the status information to the second electronic device. The first electronic device determines, based on the status information, that the second electronic device is located in the abnormal positioning signal area of the first electronic device and cannot generate effective positioning data. In addition, the second electronic device determines, based on the status information, that the first electronic device is located in the effective positioning signal area of the second electronic device, may generate effective positioning data, and send the effective positioning data to the first electronic device. Then, the first electronic device may determine the location of the second electronic device based on the obtained effective positioning data sent by the second electronic device.

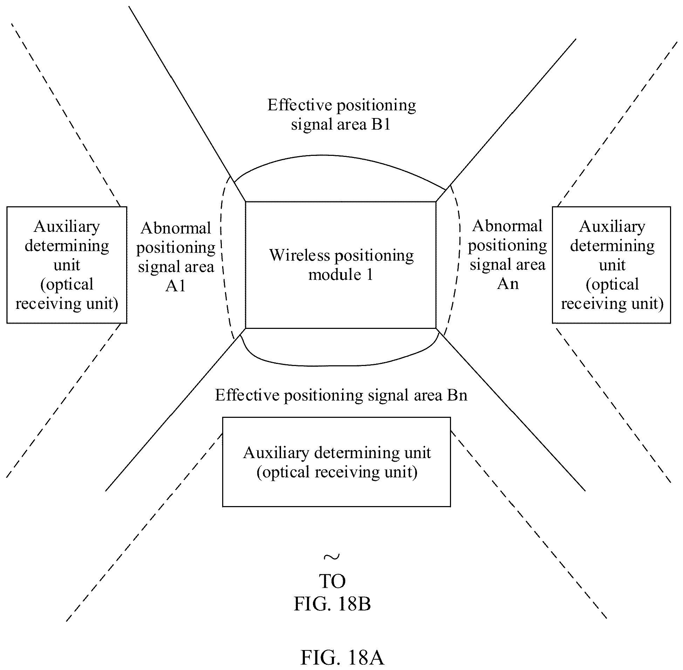

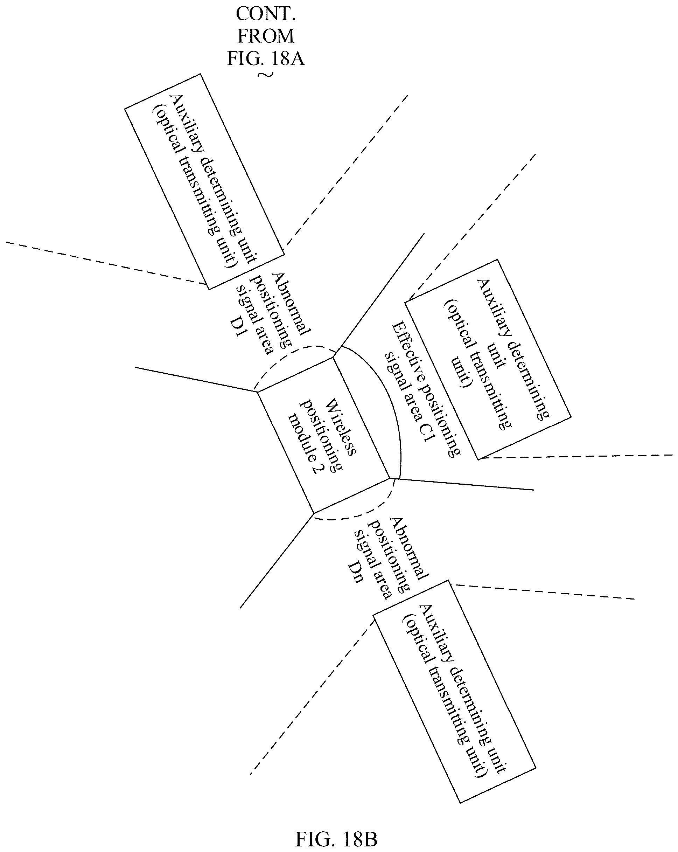

For another example, as shown in FIG. 18A and FIG. 18B, in response to a user operation, the second electronic device transmits, according to a preset transmission rule via the auxiliary determining unit (the optical transmitting unit) located in the effective positioning signal area C1, an auxiliary determining unit (an optical transmitting unit) located in an abnormal positioning signal area D1, and an auxiliary determining unit (an optical transmitting unit) located in an abnormal positioning signal area Dn, optical signals obtained through feature adjustment. Then, after receiving the optical signal, the auxiliary determining unit (the optical receiving unit) located in the effective positioning signal area Bn in the first electronic device determines, based on an optical signal feature of the optical signal, that the auxiliary determining unit sending the optical signal is an auxiliary determining unit located in the abnormal positioning signal area of the second electronic device (or determines that the auxiliary determining unit sending the optical signal is the auxiliary determining unit located in the abnormal positioning signal area D1 of the second electronic device). In addition, the first electronic device may generate corresponding status information. Then, the first electronic device sends the status information to the second electronic device. The first electronic device determines, based on the status information, that the second electronic device is located in the effective positioning signal area of the first electronic device, and may generate effective positioning data. In addition, the second electronic device determines, based on the status information, that the first electronic device is located in the abnormal positioning signal area of the second electronic device and cannot generate effective positioning data. Then, the first electronic device may determine the location of the second electronic device based on the effective positioning data determined by the first electronic device.

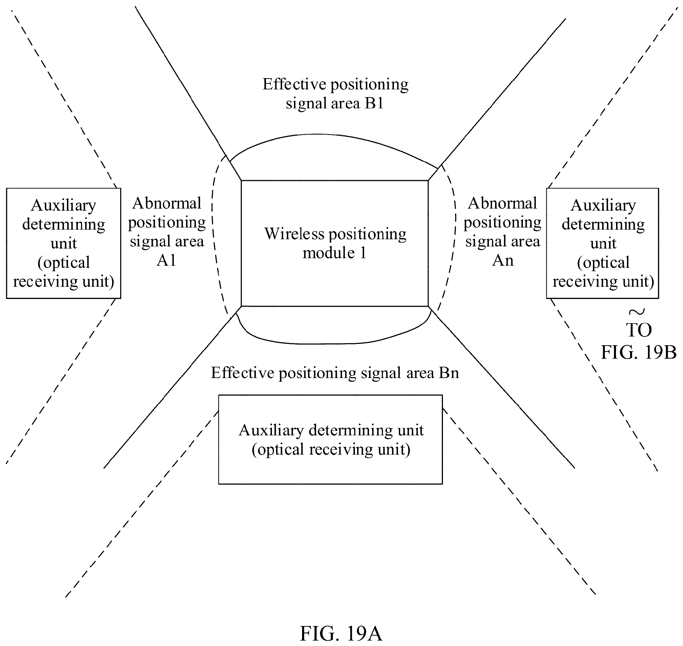

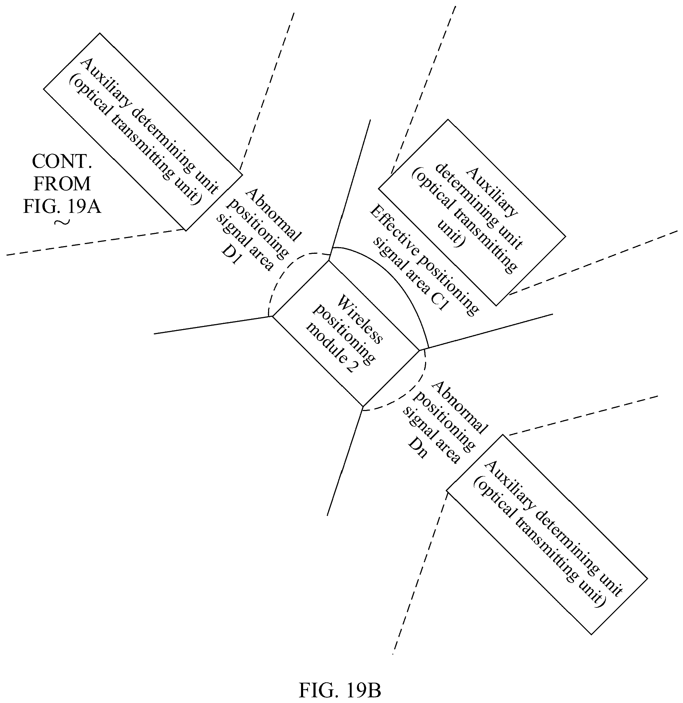

For another example, as shown in FIG. 19A and FIG. 19B, in response to a user operation, the second electronic device transmits, according to a preset transmission rule via the auxiliary determining unit (the optical transmitting unit) located in the effective positioning signal area C1, an auxiliary determining unit (an optical transmitting unit) located in an abnormal positioning signal area D1, and an auxiliary determining unit (an optical transmitting unit) located in an abnormal positioning signal area Dn, optical signals obtained through feature adjustment. Then, after receiving the optical signal, the auxiliary determining unit (the optical receiving unit) located in the abnormal positioning signal area An in the first electronic device determines, based on an optical signal feature of the optical signal, that the auxiliary determining unit sending the optical signal is the auxiliary determining unit located in the abnormal positioning signal area of the second electronic device. In addition, the first electronic device may generate corresponding status information. Then, the first electronic device sends the status information to the second electronic device. The first electronic device determines, based on the status information, that the second electronic device is located in the abnormal positioning signal area of the first electronic device and cannot generate effective positioning data. In addition, the second electronic device determines, based on the status information, that the first electronic device is located in the abnormal positioning signal area of the second electronic device and cannot generate effective positioning data. Then, the first electronic device does not receive, within a preset time, effective positioning data sent by the second electronic device, and does not generate effective positioning data. In this case, the first electronic device may determine that the current positioning fails, and the user needs to re-operate the second electronic device, to re-trigger control of the first electronic device.

In some other embodiments, the electronic device is located in small enclosed space, and an object in the enclosed space may generate optical effect like reflection on an optical signal. Consequently, the electronic device may be affected in its ability to match an edge location of a signal area based on a transceiver angle of the optical signal.

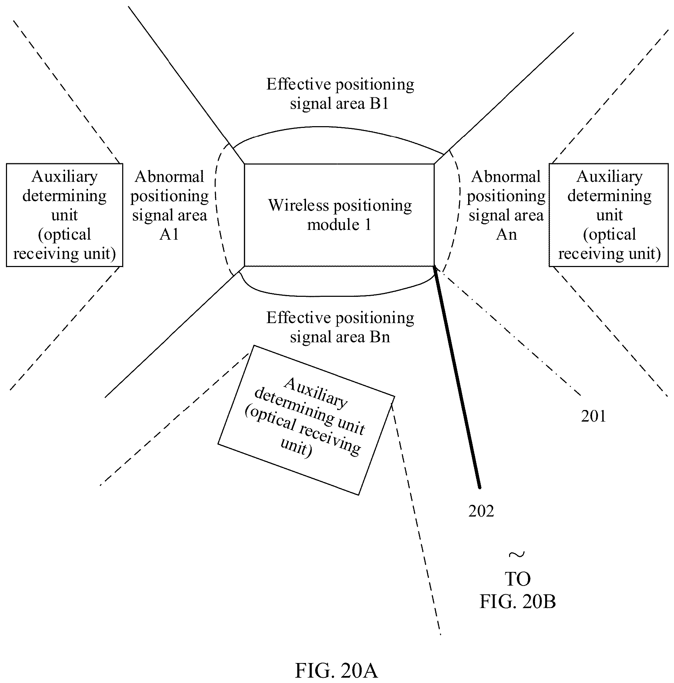

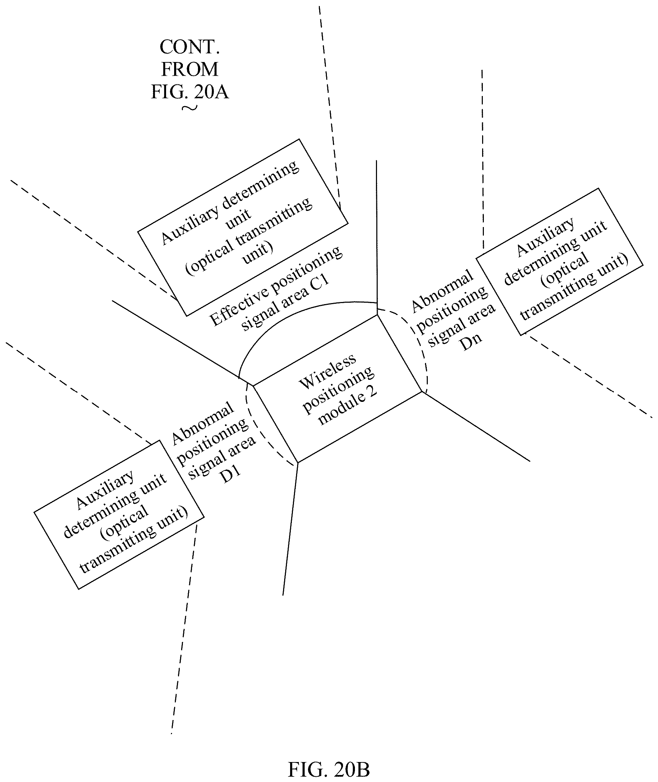

For example, as shown in FIG. 20A and FIG. 20B, based on performance of the wireless positioning module 1 in the first electronic device, an edge location of the effective positioning signal area Bn of the wireless positioning module 1 should be an edge location shown by a reference numeral 201. However, due to an optical signal reflection problem, the signal coverage area of the effective positioning signal area Bn is affected. For example, the signal coverage area of the effective positioning signal area Bn is reduced, and the edge location of the effective positioning signal area Bn changes to an edge location shown by a reference numeral 202. Correspondingly, the signal coverage area of the abnormal positioning signal area An adjacent to the effective positioning signal area Bn is increased. Therefore, in a process of configuring the auxiliary determining unit, an auxiliary determining unit of a corresponding optical signal angle should be disposed based on an actual signal coverage area of the effective positioning signal area Bn and an actual signal coverage area of the abnormal positioning signal area An. In this way, it is ensured that an optical transceiver angle of the disposed auxiliary determining unit matches an edge location of the actual signal coverage area of the signal area.

For example, in a scenario in which a display is controlled via a remote control handle in a vehicle, space in the vehicle is narrow, and a plurality of objects such as an inner wall of a vehicle door and a vehicle seat may have reflection effect on an optical signal transmitted by the remote control handle. Therefore, corresponding auxiliary determining units may be disposed based on an actual signal coverage area of a signal area of a wireless positioning module of the remote control handle and/or an actual signal coverage area of a signal area of a wireless positioning module of the display, and an optical transceiver angle of an auxiliary determining unit in a signal area can be less than or equal to a signal coverage angle of a corresponding signal area through structural constraints. Therefore, accuracy of determining the coverage angle of the signal area based on the transceiver angle of the optical signal is ensured.

It should be understood that, in a scenario in which the optical signal transceiver angle of the disposed auxiliary determining unit is determined based on a corrected signal coverage area, for a positioning process of the first electronic device or the second electronic device, still refer to the implementations of the foregoing embodiments. Details are not described herein again.

In addition, the foregoing describes the positioning process by using an example in which the auxiliary determining unit is the optical transmitting unit or the optical receiving unit. In some scenarios, the auxiliary determining unit may alternatively be an optical transceiver unit. In other words, the auxiliary determining unit may transmit an optical signal, and may also receive an optical signal. When the auxiliary determining unit is the optical transceiver unit, for a process in which the first electronic device positions the second electronic device, refer to the implementations of the foregoing embodiments. Details are not described herein again.

In some scenarios, a communication system may include a plurality of first electronic devices and/or a plurality of second electronic devices. In this case, in a positioning process, each electronic device may separately perform positioning.

For example, in a multi-speaker networking scenario, the communication system includes a plurality of speakers (namely, a plurality of first electronic devices) and one remote control handle (namely, one second electronic device). Signal coverage angles of effective positioning signal areas of wireless positioning modules of the plurality of speakers coincide, so that the plurality of speakers are uniformly controlled via one remote control handle. Therefore, when auxiliary determining units are separately disposed in the effective positioning signal areas of the wireless positioning modules of the different speakers, optical signal transceiver directions of the different auxiliary determining units are the same, to ensure that finally determined effective positioning signal areas are the same, and ensure that the remote control handle controls the plurality of speakers uniformly.

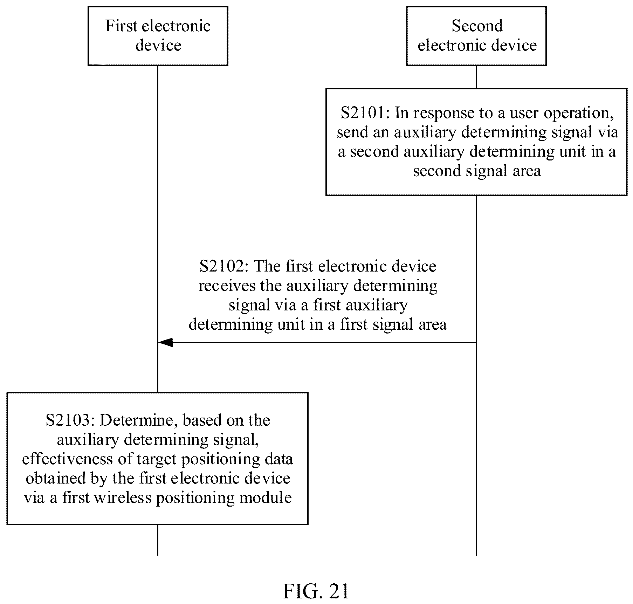

For example, FIG. 21 is a schematic flowchart of a positioning method according to an embodiment of this application. As shown in FIG. 21, the method includes the following steps.

S2101: In response to a user operation, a second electronic device sends an auxiliary determining signal via a second auxiliary determining unit in a second signal area.

The first electronic device includes a first wireless positioning module, an auxiliary determining unit is disposed in each of M signal areas of the first wireless positioning module, an optical angle of the auxiliary determining unit is less than or equal to a signal coverage angle of a corresponding signal area, and M is a positive integer.

Optionally, the first wireless positioning module includes N signal areas. No auxiliary determining unit is disposed in a signal area other than the M signal areas, and N is a positive integer greater than M. Alternatively, an auxiliary determining unit is disposed in each of the N signal areas included in the first wireless positioning module.

The second electronic device includes a second wireless positioning module, an auxiliary determining unit is disposed in each of P signal areas of the second wireless positioning module, an optical angle of the auxiliary determining unit is less than or equal to a signal coverage angle of a corresponding signal area, and P is a positive integer.

Optionally, the second wireless positioning module includes O signal areas. No auxiliary determining unit is disposed in a signal area other than the P signal areas, and O is a positive integer greater than P. Alternatively, an auxiliary determining unit is disposed in each of the O signal areas included in the second wireless positioning module.

In this way, the auxiliary determining unit is disposed in a part of signal area of the wireless positioning module, so that costs are reduced while a positioning requirement is met.

Optionally, the first wireless positioning module or the second wireless positioning module is any one of the following: an electromagnetic positioning module, a UWB positioning module, a millimeter wave positioning module, and an optical tracking positioning module.

For example, when the wireless positioning module is the electromagnetic positioning module, the wireless positioning module includes one positioning circuit and three coils. For another example, when the wireless positioning module is the UWB positioning module, the wireless positioning module includes one positioning circuit and three antennas.

Optionally, the auxiliary determining unit is at least one of a transmitting unit or a receiving unit. For example, the auxiliary determining unit is an optical transceiver unit. When sending the auxiliary determining signal to the first electronic device, the auxiliary determining unit in the second electronic device also receives an auxiliary determining signal sent by the auxiliary determining unit in the first electronic device. In other words, both the first electronic device and the second electronic device may be used for positioning in an interaction process. For a positioning process of the second electronic device, refer to the positioning process of the first electronic device. Details are not described in this embodiment of this application again. For another example, the auxiliary determining unit in the first electronic device is an optical receiving unit, and the auxiliary determining unit in the second electronic device is an optical transmitting unit. The first electronic device is a positioning device, and the second electronic device is a positioned device.

Optionally, the auxiliary determining signal is an optical signal. Optical signals sent by different auxiliary determining units are modulated optical signals. For example, the auxiliary determining unit may perform feature adjustment on the transmitted optical signal through frequency adjustment, amplitude modulation, or the like. Alternatively, different optical signals are distinguished by carrying different information in the optical signals. Therefore, a signal area in which an auxiliary determining unit sending the optical signal is located may be determined by determining a signal feature of the optical signal.

In some embodiments, in response to the user operation, the second electronic device sends the auxiliary determining signal to the first electronic device via the second auxiliary determining unit in the second signal area, where the second signal area is an area in the P signal areas. The auxiliary determining signal is used to determine effectiveness of positioning data determined by the first electronic device or the second electronic device.

Optionally, effectiveness of the positioning data indicates whether a peer device is located in an effective positioning signal area of a device when the positioning data is obtained. If the peer device is located in the effective positioning signal area of the device, local positioning data obtained by the device is effective data. If the peer device is located in an abnormal positioning signal area of the device, local positioning data obtained by the device is ineffective data. Whether the peer device is located in the effective positioning signal area of the device may be determined based on a signal area in which an auxiliary determining unit receiving or sending the auxiliary determining signal is located. For a specific process of determining effectiveness of the positioning data, refer to content described in the following step S2103. Details are not described herein again.

S2102: The first electronic device receives the auxiliary determining signal via a first auxiliary determining unit in a first signal area.

Optionally, the auxiliary determining signal is a signal received by the first electronic device in the first signal area in the M signal areas, and the first auxiliary determining unit is disposed in the first signal area.

For example, as shown in FIG. 9, in response to the user operation, the second electronic device sends the auxiliary determining signal via the auxiliary determining unit in the effective positioning signal area C1 of the wireless positioning module 2. Correspondingly, the first electronic device receives the auxiliary determining signal via the auxiliary determining unit in the effective positioning signal area Bn of the wireless positioning module 1.

S2103: The first electronic device determines, based on the auxiliary determining signal, effectiveness of target positioning data obtained by the first electronic device via the first wireless positioning module.

In some embodiments, the first electronic device determines, based on a signal feature of the auxiliary determining signal, the second signal area in which the auxiliary determining signal is sent, where the second signal area is a signal area of the second wireless positioning module included in the second electronic device. Effectiveness of the target positioning data is determined based on status information of the first signal area and the second signal area.

In some embodiments, signal features of auxiliary determining units sent by auxiliary determining units in different signal areas are different. Therefore, a signal area in which an auxiliary determining unit sending the auxiliary determining unit is located may be determined by determining a signal feature of the auxiliary determining unit.

Optionally, the signal feature includes, for example, a frequency feature, an amplitude feature, and carried information.

In some embodiments, the signal areas of the first wireless positioning module include a first effective positioning signal area and a first abnormal positioning signal area, and the signal areas of the second wireless positioning module include a second effective positioning signal area and a second abnormal positioning signal area.

For example, the second wireless positioning module of the second electronic device includes four signal areas, including two effective positioning signal areas and two abnormal signal positioning areas.

For example, signal features of auxiliary determining signals sent by auxiliary determining units disposed in the four signal areas are different.

Alternatively, in the four signal areas, signal features of auxiliary determining signals sent by auxiliary determining units disposed in the two effective positioning signal areas are the same, signal features of auxiliary determining signals sent by auxiliary determining units disposed in the two abnormal positioning signal areas are the same, and the signal feature of the auxiliary determining signal sent by the auxiliary determining unit disposed in the effective positioning signal area is different from the signal feature of the auxiliary determining signal sent by the auxiliary determining unit disposed in the abnormal positioning signal area.

Alternatively, auxiliary determining units are separately disposed in the two effective positioning signal areas and one abnormal positioning signal area in the four signal areas, and signal features of auxiliary determining signals sent by the three auxiliary determining units are different.

In some examples, when the status information indicates that the first signal area includes the first effective positioning signal area, and the second signal area includes the second effective positioning signal area, the first electronic device obtains local first positioning data via the first wireless positioning module, and receives second positioning data sent by the second electronic device, where effective target positioning data is the first positioning data or the second positioning data.

That is, the first electronic device is located in the effective positioning signal area of the second positioning module of the second electronic device, and the second electronic device is located in the effective positioning signal area of the first positioning module of the first electronic device. Therefore, both the first electronic device and the second electronic device can obtain effective positioning data. In this case, the first electronic device may select any piece of the positioning data as final target positioning data.

Optionally, after determining the status information, the first electronic device further sends the status information to the second electronic device, so that the second electronic device may determine, based on the status information, whether the positioning data needs to be obtained.

For example, the second electronic device receives the status information that is of the second signal area and the first signal area and that is sent by the first electronic device. The first signal area is an area in the M signal areas of the first wireless positioning module in the first electronic device, the first auxiliary determining unit is disposed in the first signal area, and the first auxiliary determining unit is an auxiliary determining unit that receives the auxiliary determining signal. In response to the status information, the second electronic device obtains the local second positioning data via the second wireless positioning module, and then the second electronic device sends the second positioning data to the first electronic device, where the second positioning data is used by the first electronic device to determine the target positioning data.

Optionally, when the status information indicates that the second signal area includes the second effective positioning signal area, the local second positioning data is obtained via the second wireless positioning module. To be specific, when determining that the first electronic device is located in the effective positioning signal area of the second positioning module of the second electronic device, the second electronic device obtains the local second positioning data, and sends the second positioning data to the first electronic device. In a current scenario, the second positioning data is effective positioning data.

In some other examples, when the status information indicates that the first signal area includes the first effective positioning signal area, and the second signal area includes the second abnormal positioning signal area, the first electronic device obtains local first positioning data via the first wireless positioning module, where effective target positioning data is the first positioning data.

That is, the first electronic device is located in the abnormal positioning signal area of the second positioning module of the second electronic device, and the second electronic device is located in the effective positioning signal area of the first positioning module of the first electronic device. Therefore, the first electronic device may obtain the effective positioning data. In this case, the first electronic device may use the locally obtained first positioning data as the final target positioning data.

In some other examples, when the status information indicates that the first signal area includes the first abnormal positioning signal area, and the second signal area includes the second effective positioning signal area, the first electronic device receives second positioning data sent by the second electronic device, where effective target positioning data is the second positioning data.

That is, the first electronic device is located in the effective positioning signal area of the second positioning module of the second electronic device, and the second electronic device is located in the abnormal positioning signal area of the first positioning module of the first electronic device. Therefore, the second electronic device may obtain the effective positioning data. In this case, the first electronic device may use the obtained second positioning data sent by the second electronic device as the final target positioning data.

In some other examples, when the status information indicates that the first signal area includes the first abnormal positioning signal area, and the second signal area includes the second abnormal positioning signal area, the first electronic device sends a first indication to the second electronic device, where the first indication indicates to send the auxiliary determining signal again. The target positioning data is ineffective.

That is, the first electronic device is located in the abnormal positioning signal area of the second positioning module of the second electronic device, and the second electronic device is located in the abnormal positioning signal area of the first positioning module of the first electronic device. Therefore, neither the first electronic device nor the second electronic device can obtain effective positioning data. In this case, the first electronic device may determine that this round of positioning fails. Therefore, the first electronic device may indicate the second electronic device to send the auxiliary determining signal again, to start a next round of positioning.

In this way, the low-cost auxiliary determining unit is disposed in the signal area (for example, the effective positioning signal area or the abnormal positioning signal area), so that fast and accurate positioning can also be implemented during high-precision positioning and tracking. In this way, a problem of a positioning exception in the abnormal positioning signal area is resolved at low costs, an initial location of the positioned device is quickly determined, and user experience is improved.

In addition, when the initial location of the positioned device is the abnormal location, the effective positioning signal area may also be determined through an optical constraint of the auxiliary determining unit, to quickly determine the electronic device configured to generate the effective positioning data, and greatly shorten positioning time of the initial abnormal location.

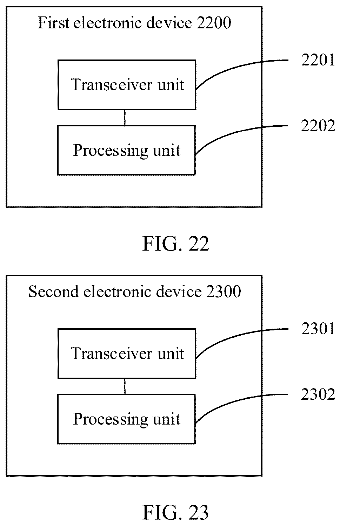

The positioning method provided in embodiments of this application is described in detail above with reference to FIG. 6 to FIG. 21. The following describes in detail a first electronic device and a second electronic device provided in embodiments of this application with reference to FIG. 22 and FIG. 23.

In a possible design, FIG. 22 is a diagram of a structure of the first electronic device according to an embodiment of this application. As shown in FIG. 22, the first electronic device 2200 includes a transceiver unit 2201 and a processing unit 2202. The first electronic device 2200 may be configured to implement a function of the first electronic device or the positioning device in the foregoing method embodiments.

Optionally, the transceiver unit 2201 is configured to support the first electronic device 2200 in performing S802 in FIG. 8, or is configured to support the first electronic device 2200 in performing S2102 in FIG. 21.

Optionally, the processing unit 2202 is configured to support the first electronic device 2200 in performing S802, S803, and S804 in FIG. 8, or is configured to support the first electronic device 2200 in performing S2103 in FIG. 21.

The transceiver unit may include a receiving unit and a sending unit, may be implemented by a transceiver or a transceiver-related circuit component, and may be a transceiver or a transceiver module. Operations and/or functions of the units in the first electronic device 2200 are separately used to implement corresponding procedures of the positioning method in the foregoing method embodiments. All related content of the steps in the foregoing method embodiments may be cited in function descriptions of corresponding functional units. For brevity, details are not described herein again.

Optionally, the first electronic device 2200 shown in FIG. 22 may further include a storage unit (not shown in FIG. 22), and the storage unit stores a program or instructions. When the transceiver unit 2201 and the processing unit 2202 execute the program or the instructions, the first electronic device 2200 shown in FIG. 22 is enabled to perform the positioning method in the foregoing method embodiments.

For technical effect of the first electronic device 2200 shown in FIG. 22, refer to technical effect of the positioning method in the foregoing method embodiments. Details are not described herein again.

In addition to a form of the first electronic device 2200, the technical solutions provided in this application may also be a functional unit or a chip in the first electronic device, or an apparatus used together with the first electronic device.

In a possible design, FIG. 23 is a diagram of a structure of the second electronic device according to an embodiment of this application. As shown in FIG. 23, the second electronic device 2300 includes a transceiver unit 2301 and a processing unit 2302. The second electronic device 2300 may be configured to implement a function of the second electronic device or the positioned device in the foregoing method embodiments.

Optionally, the transceiver unit 2301 is configured to support the second electronic device 2300 in performing S801 in FIG. 8, or is configured to support the second electronic device 2300 in performing S2101 in FIG. 21.

Optionally, the processing unit 2302 is configured to support the second electronic device 2300 in performing S2101 in FIG. 21.

The transceiver unit may include a receiving unit and a sending unit, may be implemented by a transceiver or a transceiver-related circuit component, and may be a transceiver or a transceiver module. Operations and/or functions of the units in the second electronic device 2300 are separately used to implement corresponding procedures of the positioning method in the foregoing method embodiments. All related content of the steps in the foregoing method embodiments may be cited in function descriptions of corresponding functional units. For brevity, details are not described herein again.

Optionally, the second electronic device 2300 shown in FIG. 23 may further include a storage unit (not shown in FIG. 23), and the storage unit stores a program or instructions. When the transceiver unit 2301 and the processing unit 2302 execute the program or the instructions, the second electronic device 2300 shown in FIG. 23 is enabled to perform the positioning method in the foregoing method embodiment.

For technical effect of the second electronic device 2300 shown in FIG. 23, refer to technical effect of the positioning method in the foregoing method embodiments. Details are not described herein again.

In addition to a form of the second electronic device 2300, the technical solutions provided in this application may also be a functional unit or a chip in the second electronic device, or an apparatus used together with the second electronic device.

An embodiment of this application further provides a chip system, including a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the positioning method in the foregoing embodiments.

An embodiment of this application further provides a computer program product. When the computer program product runs on a computer, the computer is enabled to perform the foregoing related steps, to implement the positioning method in the foregoing embodiments.

In addition, an embodiment of this application further provides an apparatus. The apparatus may be specifically a component or a module, and the apparatus may include one or more processors and a memory that are connected to each other. The memory is configured to store a computer program. When the computer program is executed by the one or more processors, the apparatus is enabled to perform the positioning method in the foregoing method embodiments.

The apparatus, the computer-readable storage medium, the computer program product, or the chip provided in embodiments of this application is configured to perform the corresponding method provided above. Therefore, for beneficial effect that can be achieved, refer to the beneficial effect in the corresponding method provided above. Details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, the storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. The apparatus embodiment described above is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall be subject to the protection scope of the claims.

## Claims

1. A positioning method, applied to a first electronic device, wherein the first electronic device comprises a first wireless positioning module, an auxiliary determining unit is disposed in each of M signal areas of the first wireless positioning module, an optical angle of the auxiliary determining unit is less than or equal to a signal coverage angle of a corresponding signal area, and M is a positive integer, and the method comprises:
receiving, via a first auxiliary determining unit, an auxiliary determining signal sent by a second electronic device; and
determining, based on the auxiliary determining signal, effectiveness of target positioning data obtained by the first electronic device via the first wireless positioning module.

2. The method according to claim 1, wherein the auxiliary determining signal is a signal received by the first electronic device in a first signal area in the M signal areas, and the first auxiliary determining unit is disposed in the first signal area; and determining, based on the auxiliary determining signal, effectiveness of the target positioning data obtained by the first electronic device via the first wireless positioning module comprises:
determining, based on a signal feature of the auxiliary determining signal, a second signal area in which the auxiliary determining signal is sent, wherein the second signal area is a signal area of a second wireless positioning module comprised in the second electronic device; and
determining effectiveness of the target positioning data based on status information of the first signal area and the second signal area.

3. The method according to claim 2, wherein the signal areas of the first wireless positioning module comprise a first effective positioning signal area and a first abnormal positioning signal area, and the signal area of the second wireless positioning module comprises a second effective positioning signal area and a second abnormal positioning signal area; and determining effectiveness of the target positioning data based on the status information of the first signal area and the second signal area comprises:
when the status information indicates that the first signal area comprises the first effective positioning signal area, and the second signal area comprises the second effective positioning signal area, obtaining local first positioning data via the first wireless positioning module, and receiving second positioning data sent by the second electronic device, wherein effective target positioning data is the first positioning data or the second positioning data.

4. The method according to claim 2 or 3, wherein determining effectiveness of the target positioning data based on the status information of the first signal area and the second signal area comprises:
when the status information indicates that the first signal area comprises the first effective positioning signal area, and the second signal area comprises the second abnormal positioning signal area, obtaining local first positioning data via the first wireless positioning module, wherein effective target positioning data is the first positioning data.

5. The method according to any one of claims 2 to 4, wherein determining effectiveness of the target positioning data based on the status information of the first signal area and the second signal area comprises:
when the status information indicates that the first signal area comprises the first abnormal positioning signal area, and the second signal area comprises the second effective positioning signal area, receiving the second positioning data sent by the second electronic device, wherein effective target positioning data is the second positioning data.

6. The method according to any one of claims 2 to 5, wherein determining effectiveness of the target positioning data based on the status information of the first signal area and the second signal area comprises:
when the status information indicates that the first signal area comprises the first abnormal positioning signal area, and the second signal area comprises the second abnormal positioning signal area, sending a first indication to the second electronic device, wherein the first indication indicates to send the auxiliary determining signal again, and the target positioning data is ineffective.

7. The method according to any one of claims 1 to 6, wherein the auxiliary determining unit is at least one of a transmitting unit or a receiving unit.

8. The method according to any one of claims 1 to 7, wherein the first wireless positioning module comprises N signal areas, no auxiliary determining unit is disposed in a signal area other than the M signal areas, and N is a positive integer greater than M.

9. The method according to any one of claims 1 to 8, wherein the first wireless positioning module is any one of the following: an electromagnetic positioning module, an ultra-wideband UWB technology positioning module, a millimeter wave positioning module, and an optical tracking positioning module.

10. The method according to any one of claims 1 to 9, wherein the auxiliary determining signal is an optical signal.

11. A positioning method, applied to a second electronic device, wherein the second electronic device comprises a second wireless positioning module, an auxiliary determining unit is disposed in each of P signal areas of the second wireless positioning module, an optical angle of the auxiliary determining unit is less than or equal to a signal coverage angle of a corresponding signal area, and P is a positive integer, and the method comprises:
in response to a user operation, sending an auxiliary determining signal to a first electronic device via a second auxiliary determining unit in a second signal area, wherein the second signal area is an area in the P signal areas, and the auxiliary determining signal is used to determine effectiveness of positioning data determined by the first electronic device or the second electronic device.

12. The method according to claim 11, wherein the method further comprises:
receiving status information that is of the second signal area and a first signal area and that is sent by the first electronic device, wherein the first signal area is an area in M signal areas of a first wireless positioning module in the first electronic device, M is a positive integer, a first auxiliary determining unit is disposed in the first signal area, and the first auxiliary determining unit is an auxiliary determining unit that receives the auxiliary determining signal;
in response to the status information, obtaining local second positioning data via the second wireless positioning module; and
sending the second positioning data to the first electronic device, wherein the second positioning data is used by the first electronic device to determine target positioning data.

13. The method according to claim 12, wherein the signal areas of the first wireless positioning module comprise a first effective positioning signal area and a first abnormal positioning signal area, and the signal areas of the second wireless positioning module comprise a second effective positioning signal area and a second abnormal positioning signal area; and in response to the status information, obtaining the local second positioning data via the second wireless positioning module comprises:
when the status information indicates that the second signal area comprises the second effective positioning signal area, obtaining the local second positioning data via the second wireless positioning module.

14. The method according to any one of claims 11 to 13, wherein the auxiliary determining unit is at least one of a transmitting unit or a receiving unit.

15. The method according to any one of claims 11 to 14, wherein the second wireless positioning module comprises O signal areas, no auxiliary determining unit is disposed in a signal area other than the P signal areas, and O is a positive integer greater than P.

16. The method according to any one of claims 11 to 15, wherein the second wireless positioning module is any one of the following: an electromagnetic positioning module, an ultra-wideband UWB technology positioning module, a millimeter wave positioning module, and an optical tracking positioning module.

17. The method according to any one of claims 11 to 16, wherein the auxiliary determining signal is an optical signal.

18. An electronic device, wherein the electronic device comprises a first wireless positioning module, an auxiliary determining unit is disposed in each of M signal areas of the first wireless positioning module, an optical angle of the auxiliary determining unit is less than or equal to a signal coverage angle of a corresponding signal area, the auxiliary determining unit is configured to determine effectiveness of positioning data obtained via the first wireless positioning module, and M is a positive integer.

19. The electronic device according to claim 18, wherein the auxiliary determining unit is at least one of a transmitting unit or a receiving unit.

20. The electronic device according to claim 18 or 19, wherein the first wireless positioning module comprises N signal areas, no auxiliary determining unit is disposed in a signal area other than the M signal areas, and N is a positive integer greater than M.

21. The electronic device according to any one of claims 18 to 20, wherein the first wireless positioning module is any one of the following: an electromagnetic positioning module, an ultra-wideband UWB technology positioning module, a millimeter wave positioning module, and an optical tracking positioning module.

22. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 10, or the electronic device is enabled to perform the method according to any one of claims 11 to 17.

23. A computer-readable storage medium, wherein the computer-readable storage medium comprises a computer program, and when the computer program is run on an electronic device, the electronic device is enabled to perform the method according to any one of claims 1 to 10, or the electronic device is enabled to perform the method according to any one of claims 11 to 17.

24. A computer program product, wherein when the computer program product runs on a computer, the computer is enabled to perform the method according to any one of claims 1 to 10 or the method according to any one of claims 11 to 17.
